(19) Europäisches Patentamt
European Patent Office
Office européen des brevets

(11) EP 3 970 990 B1

(12) EUROPEAN PATENT SPECIFICATION

(45) Date of publication and mention of the grant of the patent:
**22.01.2025 Bulletin 2025/04**

(21) Application number: **20818815.1**

(22) Date of filing: **04.03.2020**

(51) International Patent Classification (IPC):
***B60C 1/00*** (2006.01) ***C08K 5/548*** (2006.01)
***C08L 7/00*** (2006.01) ***C08L 21/00*** (2006.01)
***B60C 11/00*** (2006.01) ***C08K 3/36*** (2006.01)

(52) Cooperative Patent Classification (CPC):
(C-Sets available)
**B60C 1/0016; B60C 11/0008; B60C 11/005;**
C08K 2201/006; Y02T 10/86 (Cont.)

(86) International application number:
**PCT/JP2020/009187**

(87) International publication number:
**WO 2020/246087 (10.12.2020 Gazette 2020/50)**

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.06.2019 JP 2019105363**

(43) Date of publication of application:
**23.03.2022 Bulletin 2022/12**

(73) Proprietor: **Sumitomo Rubber Industries, Ltd.**
**Kobe-shi, Hyogo 651-0072 (JP)**

(72) Inventor: **TSUCHIDA, Tsuyoshi**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 2 902 436** **EP-A1- 3 300 923**
**WO-A1-2012/141158** **WO-A1-2013/058390**
**WO-A1-2018/104671** **JP-A- 2000 016 010**
**JP-A- 2006 062 518** **JP-A- 2007 506 589**
**JP-A- 2009 001 672** **JP-A- 2011 046 299**
**JP-A- 2011 132 373** **JP-A- 2011 144 239**
**JP-A- 2013 177 113** **JP-A- 2013 177 113**
**JP-A- 2015 124 310** **JP-A- 2015 124 365**
**JP-A- 2015 129 238** **JP-A- H10 175 403**
**US-B1- 6 247 512**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 9/06, C08L 9/00, C08L 7/00, C08L 91/00, C08L 83/08, C08L 91/06, C08K 3/04, C08K 3/34, C08K 3/22, C08K 5/09, C08K 3/06, C08K 5/47, C08K 5/31, C08K 5/18;**
**C08L 9/06, C08L 9/00, C08L 7/00, C08L 91/00, C08L 91/06, C08K 3/04, C08K 3/34, C08K 5/548, C08K 3/22, C08K 5/09, C08K 3/06, C08K 5/47, C08K 5/31, C08K 5/18;**
**C08L 9/06, C08L 9/00, C08L 15/00, C08L 91/00, C08L 83/08, C08L 91/06, C08K 3/04, C08K 3/34, C08K 3/22, C08K 5/09, C08K 3/06, C08K 5/47, C08K 5/31, C08K 5/18;**
**C08L 9/06, C08L 9/00, C08L 15/00, C08L 91/00, C08L 91/06, C08K 3/04, C08K 3/34, C08K 5/548, C08K 3/22, C08K 5/09, C08K 3/06, C08K 5/47, C08K 5/31, C08K 5/18**

## Description

TECHNICAL FIELD

The present invention relates to a pneumatic tire.

BACKGROUND ART

In recent years, due to increasing market demands, a tire has been required to have a longer life and a higher durability, and a tread rubber has been required to have an improved abrasion resistance.
On the other hand, at the same time, due to demand for fuel efficiency, reduction in rolling resistance of a tire has been also required, and silica is generally used as a reinforcing filler for a high-performance tire for a passenger car.
Therefore, for the purpose of improving rolling resistance and abrasion resistance with good balance and securing molding processability, it is known that a tread of a tire is formed into a two-layer structure of a cap tread and a base tread, the cap tread adopting a rubber composition having an excellent abrasion resistance and the base tread adopting a rubber composition having a low heat generation.
Patent Document 1 describes a pneumatic tire forming a two-layer structure of a cap tread and a base tread, the base tread using a rubber composition that can achieve both steering stability and rolling resistance with good balance. Moreover, Patent Document 2 discloses a pneumatic tire using a rubber composition comprising silica, carbon black and a release agent for a cap tread and a rubber composition comprising carbon black and/or silica for a base tread and making a volume of the base tread in a total volume of the tread within an effective contact width be 15 to 50%, for the purpose of providing a pneumatic tire having excellent rolling resistance, wet performance and abrasion resistance with good balance and a suppressed occurrence of tread groove cracks (TGC).

PRIOR ART DOCUMENT

Patent Document

Patent Document 1: JP 2011-1521 A

Patent Document 2: JP2013-177113 A

SUMMARY OF THE INVENTION

PROBLEM TO BE SOLVED BY THE INVENTION

Based on such a conventional technique, a method of increasing toughness is considered by increasing specific surface area of a reinforcing filler in order to increase the number of sites to be bonded with a polymer for improved abrasion resistance, though it is still insufficient.
Moreover, Patent Document 1 does not particularly refer to abrasion resistance and molding processability, and there is still room for improvement. Also in Patent Document 2, there is still room for improvement in terms of a high degree of balance of fuel efficiency, abrasion resistance, and molding processability.
Therefore, it is an object of the present invention to provide a pneumatic tire that achieves a high degree of balance of fuel efficiency, abrasion resistance, and molding processability.

MEANS TO SOLVE THE PROBLEM

In view of the above-described problems, the present inventor has found that a high degree of balance of fuel efficiency, abrasion resistance, and molding processability of a tire can be achieved by stipulating a mass ratio of a cap tread to a base tread of the tire and making the cap tread from a rubber composition comprising a predetermined amount of silica having a high specific surface area and a rubber component comprising a predetermined amount of a natural rubber, and completed the present invention.
That is, the present invention relates to:

[1] A pneumatic tire comprising:

a tread composed of a cap tread and a base tread,
wherein the cap tread is formed of a rubber composition comprising 30 to 120 parts by mass, preferably 40 to 110 parts by mass, more preferably 50 to 100 parts by mass, more preferably 80 to 100 parts by mass of silica having 180 to 280 $m^2$/g, preferably 180 to 270 $m^2$/g, more preferably 190 to 270 $m^2$/g, more preferably 195 to 260 $m^2$/g, more preferably 195 to 235 $m^2$/g of a BET specific surface area, based on 100 parts by mass of a rubber component comprising 10% by mass or more and less than 30% by mass, preferably 15 to 25% by mass, more preferably 17 to 23% by mass of a natural rubber, and
wherein C and B satisfy the following inequality (1),

$$150 \leq C/B \times 100 \leq 900 \quad (1)$$

(preferably $180 \leq C/B \times 100 \leq 700$, more preferably $200 \leq C/B \times 100 \leq 600$, further preferably $220 \leq C/B \times 100 \leq 500$)
where C represents a ratio (% by mass) of a mass of the cap tread to a total mass of the tread, and B represents a ratio (% by mass) of a mass of the base tread to the total mass of the tread,

[2] The pneumatic tire of [1] above, wherein the rubber composition further comprises a silane coupling agent,
[3] The pneumatic tire of [1] or [2] above, wherein a complex elastic modulus at 70°C $E^*_{70°C}$ of the rubber composition is 1.9 to 9.5 MPa, preferably 2.9 to 9.5 MPa, more preferably 3.9 to 9.5 MPa, more preferably 4.9 to 9.5 MPa, or preferably 2.9 to 8.8 MPa, more preferably 3.9 to 8.8 MPa, more preferably 4.9 to 8.8 MPa,
[4] The pneumatic tire of any one of [1] to [3] above, wherein a loss tangent at 70°C tan $\delta_{70°C}$ of the rubber composition is 0.05 to 0.17, preferably 0.05 to 0.16, more preferably 0.05 to 0.15, more preferably 0. 05 to 0.14, or preferably 0.10 to 0.17, more preferably 0.10 to 0.16, more preferably 0.10 to 0.15, more preferably 0.10 to 0.14,
[5] The pneumatic tire of any one of [1] to [4] above, wherein the natural rubber is a modified natural rubber having a phosphorus content of 500 ppm or less, preferably 400 ppm or less, more preferably 300 ppm or less, more preferably 200 ppm or less, more preferably 150 ppm or less, more preferably 100 ppm or less,
[6] The pneumatic tire of any one of [1] to [5] above, wherein the natural rubber is a modified natural rubber having a nitrogen content of 0.30% by mass or less, preferably 0.25% by mass or less, more preferably 0.20% by mass or less, more preferably 0.15% by mass or less,
[7] The pneumatic tire of [5] or [6] above, wherein the modified natural rubber is a saponified natural rubber,
[8] The pneumatic tire of [2] above, wherein the silane coupling agent is a compound comprising a bond unit A represented by the following chemical formula (I) and a bond unit B represented by the following chemical formula (II),

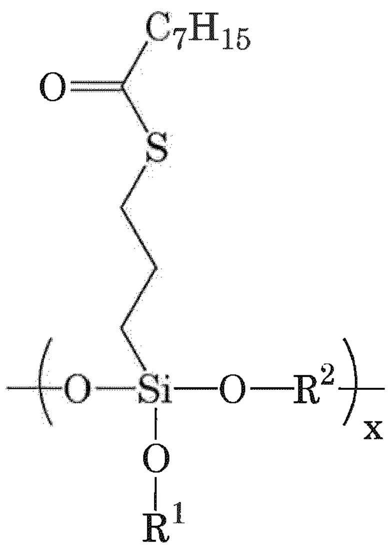

( I )

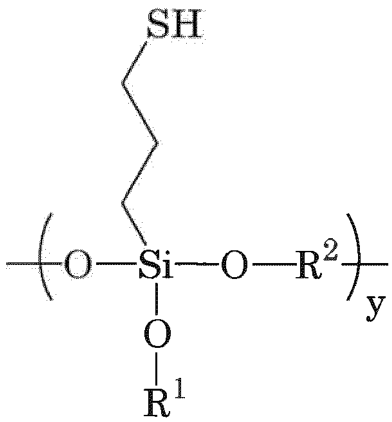 (II)

(where x is an integer of 0 or more, and y is an integer of 1 or more. $R^1$ represents hydrogen, a halogen, a branched or non-branched alkyl group having 1 to 30 carbon atoms, a branched or non-branched alkenyl group having 2 to 30 carbon atoms, a branched or non-branched alkynyl group having 2 to 30 carbon atoms, or a group in which hydrogen at terminal of the alkyl group is substituted with hydroxyl group or carboxyl group. $R^2$ represents a branched or non-branched alkylene group having 1 to 30 carbon atoms, a branched or non-branched alkenylene group having 2 to 30 carbon atoms, or a branched or non-branched alkynylene group having 2 to 30 carbon atoms. $R^1$ and $R^2$ may together form a ring structure.)

EFFECTS OF THE INVENTION

According to the present invention, a pneumatic tire can be provided which has a tread composed of a cap tread and a base tread, the cap tread being formed of a rubber composition comprising 30 to 120 parts by mass of silica having a BET specific surface area of 180 to 280 $m^2/g$ based on 100 parts by mass of a rubber component comprising 10% by mass or more and less than 30% by mass of a natural rubber, a mass ratio of the cap tread to the base tread satisfying the above-described inequality (1), thereby achieving a high degree of balance of fuel efficiency, abrasion resistance, and molding processability.

EMBODIMENT FOR CARRYING OUT THE INVENTION

The pneumatic tire of the present disclosure is a pneumatic tire comprising a tread composed of a cap tread and a base tread, wherein the cap tread is formed of a rubber composition comprising 30 to 120 parts by mass of silica having a BET specific surface area of 180 to 280 $m^2/g$ based on 100 parts by mass of a rubber component comprising 10% by mass or more and less than 30% by mass of a natural rubber, and wherein a mass ratio of the cap tread to the base tread satisfies the following inequality (1),

$$150 \leq C/B \times 100 \leq 900 \quad (1),$$

where C represents a ratio (% by mass) of a mass of the cap tread to a total mass of the tread, and B represents a ratio (% by mass) of a mass of the base tread to the total mass of the tread.

The pneumatic tire of the present disclosure, by using a rubber composition for cap tread comprising a predetermined amount of a fine particle silica having a predetermined specific surface area and a rubber component comprising a predetermined amount of a natural rubber and further making a mass ratio C/B of the cap tread to the base tread satisfy the above-described inequality (1), can maintain a high fuel efficiency without unnecessarily increase of the tire weight, maximize abrasion resistance performance of the fine particle silica having a predetermined specific surface area, and improve adhesiveness (tackiness) with a base tread rubber, which results in achievement of a high degree of balance of fuel efficiency, abrasion resistance, and molding processability.

In one embodiment, a mass ratio index (C/B ratio index: C/B $\times$ 100) of the cap tread to the base tread of the pneumatic tire is 150 or more, preferably 180 or more, more preferably 200 or more, further preferably 220 or more. When the C/B ratio index is less than 150, the ratio of the base tread increases, and the cap tread component decreases, thereby causing extreme reduction in abrasion resistance and reduction in steering stability due to a difference in hardness between the cap rubber and the base rubber. Moreover, the C/B ratio index is 900 or less, preferably 700 or less, more preferably 600 or less, further preferably 500 or less. When the C/B ratio index exceeds 900, the amount of the base compounding component is reduced, thereby causing deterioration of fuel efficiency and reduction in steering stability due

to a difference in hardness between the cap rubber and the base rubber.

In one embodiment, the pneumatic tire of the present disclosure preferably has 1.9 to 9.5 MPa of a complex elastic modulus at 70°C $E^*_{70°C}$ of the rubber composition of the cap tread. When $E^*_{70°C}$ is 1.9 MPa or more, there is a tendency of being high in rigidity and excellent in steering stability and durability. Moreover, when $E^*_{70°C}$ is 9.5 MPa or less, there is a tendency of being excellent in riding comfort. $E^*_{70°C}$ is more preferably 2.9 MPa or more, more preferably 3.9 MPa or more, further preferably 4.9 MPa or more. Moreover, $E^*_{70°C}$ is more preferably 8.8 MPa or less. $E^*_{70°C}$ is a value obtained by a measuring method which will be described later in Examples.

In one embodiment, the pneumatic tire of the present disclosure preferably has 0.05 to 0.17 of a loss tangent at 70°C $\tan\delta_{70°C}$ of the rubber composition of the cap tread. When $\tan\delta_{70°C}$ is 0.05 or more, there is a tendency of being excellent in grip performance. Moreover, when $\tan\delta_{70°C}$ is 0.17 or less, there is a tendency of being low in rolling resistance and excellent in fuel efficiency. $\mathrm{Tan}\,\delta_{70°C}$ is more preferably 0.10 or more. Moreover, $\tan\delta_{70°C}$ is more preferably 0.16 or less, more preferably 0.15 or less, further preferably 0.14 or less. $\mathrm{Tan}\,\delta_{70°C}$ is a value obtained by a measuring method which will be described later in Examples.

Besides, in the present specification, a numerical range identified with "to" means to include the numerical values of both ends, unless otherwise specified.

<Rubber composition for cap tread>

(Rubber component)

The rubber component used in the rubber composition for cap tread comprises 10% by mass or more and less than 30% by mass of a natural rubber. As other rubber components, a diene-based synthetic rubber, a butyl rubber (IIR), and the like can be used. Examples of the diene-based synthetic rubber include, for example, an isoprene rubber (IR), a butadiene rubber (BR), a styrene-butadiene rubber (SBR), an acrylonitrile-butadiene rubber (NBR), a chloroprene rubber (CR), and the like. These rubber components may be used alone, or two or more thereof may be used in combination. Among them, a BR or a SBR is preferable, and a BR and a SBR are more preferably used in combination with a natural rubber, since they exhibit fuel efficiency and wet grip performance with good balance.

Natural rubber

Examples of the natural rubber include, in addition to the natural rubber (NR), a modified natural rubber (modified NR) such as an epoxidized natural rubber (ENR), a hydrogenated natural rubber (HNR), a deproteinized natural rubber (DPNR), and an ultra pure natural rubber, and the like. Among them, it is preferable to include a NR or a modified NR, and it is more preferable to include a NR only or a modified NR only. Here, as a natural rubber, a modified NR is preferable from the viewpoint that effects of the present disclosure can be exhibited more satisfactorily. These natural rubbers may be used alone, or two or more thereof may be used in combination.

The NR is not particularly limited, and those common in the rubber industry such as SIR20, RSS#3, and TSR20 can be used.

The modified NR is a natural rubber in which proteins other than natural polyisoprenoid components comprised in a natural rubber latex are mainly reduced or removed (preferably, a natural rubber in which impurities such as phospholipids and gels are also removed). Natural rubber particles comprised in the natural rubber latex have a structure in which isoprenoid components are coated with impurity components. When impurities on the surface of the natural rubber particles are removed, the structure of the isoprenoid components changes, and interaction with compoundings agent also changes, so that it is presumed that effects of reducing energy loss and improving durability can be obtained. Moreover, by removing impurities of the natural rubber latex, odor peculiar to the natural rubber can be reduced.

As a modifying treatment, known methods such as saponification treatment, enzyme treatment, and mechanical treatment such as ultrasonic waves and centrifugation are used without limitation. Among them, saponification treatment is preferable from the viewpoints of production efficiency, cost, and dispersibility of a white filler.

Examples of the natural rubber latex includes a raw latex (a field latex) collected by tapping Hevea wood, a concentrated latex (a purified latex, a high ammonia latex to which ammonia is added by a conventional method, a LATZ latex stabilized by zinc flower, TMTD (tetramethylthiuram disulfide) and ammonia, etc.) obtained by concentrating a raw latex by centrifugation or a creaming method, and the like. Among them, it is preferable to use a field latex because modification by pH is easily controlled.

The rubber component (solid rubber content) in the natural rubber latex is preferably 5 to 40% by mass, more preferably 10 to 30% by mass, from the viewpoints of stirring efficiency, etc.

Examples of the saponification treatment method include, for example, the methods described in JP 2010-138359 A and JP 2010-174169 A, and the like. Specifically, it can be performed by adding a basic compound, and a surfactant if necessary, to the natural rubber latex and leaving the mixture to stand at a predetermined temperature

for a certain period of time, and the mixture may be stirred if necessary.

The basic compound is not particularly limited, and a basic inorganic compound is appropriate from the viewpoint of removal performance of proteins and the like. Examples of the basic inorganic compound include metal hydroxides such as alkali metal hydroxides and alkaline earth metal hydroxides; metal carbonates such as alkali metal carbonates and alkaline earth metal carbonates; metal hydrogen carbonates such as alkali metal hydrogen carbonates; metal phosphates such as alkali metal phosphates; metal acetates such as alkali metal acetates; metal hydrides such as alkali metal hydrides; ammonia, and the like.

Examples of the alkali metal hydroxide include lithium hydroxide, sodium hydroxide, potassium hydroxide, and the like. Examples of the alkaline earth metal hydroxide include magnesium hydroxide, calcium hydroxide, barium hydroxide, and the like. Examples of the alkali metal carbonate include lithium carbonate, sodium carbonate, potassium carbonate, and the like. Examples of the alkaline earth metal carbonate include magnesium carbonate, calcium carbonate, barium carbonate, and the like. Examples of the alkali metal hydrogen carbonate include lithium hydrogen carbonate, sodium hydrogen carbonate, potassium hydrogen carbonate, and the like. Examples of the alkali metal phosphate include sodium phosphate, sodium hydrogen phosphate, and the like. Examples of the alkali metal acetate include sodium acetate, potassium acetate, and the like. Examples of the alkali metal hydride include sodium hydride, potassium hydride, and the like. Among them, metal hydroxide, metal carbonate, metal hydrogen carbonate, metal phosphate, and ammonia are preferable, and sodium hydroxide and potassium hydroxide which are alkali metal hydroxides are further preferable, from the viewpoints of saponification efficiency and ease of treatment. These basic compounds may be used alone, or two or more thereof may be used in combination.

Examples of the surfactant include, but not particularly limited to, known anionic surfactants such as polyoxyethylene alkyl ether sulfate, nonionic surfactants, amphoteric surfactants, and the like, and anionic surfactants such as polyoxyethylene alkyl ether sulfate are appropriate from the viewpoint that a rubber can be well saponified without being solidified. Besides, in the saponification treatment, amounts of the basic compound and the surfactant added, and temperature and time of the saponification treatment may be appropriately set.

A solidification and drying step is a step of obtaining a modified NR by solidifying a high-purity product obtained in the modification step and then drying the solidified product. Since a natural rubber obtained in the solidification and drying step is removed of impurities on the surface of the natural rubber particles in the previous modification step, it is considered that the rubber composition comprising the natural rubber has excellent rubber physical properties.

Examples of the solidification method include, but not particularly limited to, a method of adding acid such as a formic acid, an acetic acid, and a sulfuric acid to adjust pH to 4 to 7, further adding a polymer flocculant as necessary, and stirring the mixture, and the like. By performing solidification, rubber contents of the modified product can be flocculated to obtain a solidified rubber.

The drying method is not particularly limited, and it can be performed using a normal dryer such as, for example, a trolley type dryer, a vacuum dryer, an air dryer, and a drum dryer used in a drying step in a producing method of a normal natural rubber such as TSR.

The drying is preferably performed after washing the obtained solidified rubber. The washing method is not particularly limited as long as it can sufficiently remove impurities in the entire rubber, examples of which include, for example, a method of diluting and washing rubber components with water, and then centrifuging them, a method of leaving the rubber to stand and float, and discharging an aqueous phase only to take out rubber components, and the like. Furthermore, if the washing is performed after treating the obtained solidified rubber with a basic compound, impurities trapped in the rubber during solidification can be redissolved before washing, and impurities adhered strongly into the solidified rubber can also be removed.

The modified NR preferably has 0.30% by mass or less of a nitrogen content. Within such a range, the effects of the present disclosure are exhibited. The nitrogen content is more preferably 0.25% by mass or less, more preferably 0.20% by mass or less, further preferably 0.15% by mass or less. The nitrogen content can be measured by a conventional method such as, for example, a Kjeldahl method. Nitrogen is derived from protein. Besides, a lower limit of the nitrogen content is preferably as low as possible. For example, 0.06% by mass or 0.01% by mass of the nitrogen content is considered to be a sufficiently low value.

The modified NR preferably has 500 ppm or less of a phosphorus content. Within such a range, rubber physical properties such as fuel efficiency tend to be improved. The phosphorus content is more preferably 400 ppm or less, more preferably 300 ppm or less, more preferably 200 ppm or less, more preferably 150 ppm or less, further preferably 100 ppm or less. Here, the phosphorus content can be measured by a conventional method such as, for example, an ICP emission spectrometry. Phosphorus is derived from phospholipid (a phosphorus compound).

A gel content rate in the modified NR is preferably 20% by mass or less. Within such a range, rubber physical properties such as fuel efficiency tend to be improved. The gel content rate is more preferably 10% by mass or less, further preferably 7% by mass or less. The gel content rate means a value measured as an insoluble content with respect to toluene which is a non-polar solvent, and hereinafter it may be simply referred to as a "gel content rate" or a "gel content". A method of measuring a gel content rate is as follows. First, a natural rubber sample is immersed in a dehydrated toluene,

shaded in a dark place and left for 1 week, and then the toluene solution is centrifuged at $1.3 \times 10^5$ rpm for 30 minutes to separate insoluble gel contents from toluene-soluble contents. Methanol is added to the insoluble gel contents, and the mixture is solidified, followed by dried to calculate a gel content rate from a ratio of a mass of the gel contents to the original mass of the sample.

A content of a natural rubber in 100% by mass of the rubber component is 10% by mass or more, preferably 15% by mass or more, more preferably 17% by mass or more. When the content of the natural rubber is less than 10% by mass, an adhesive force (molding processability) required for a cap tread cannot be sufficiently obtained, and a cap tread rubber and a base tread rubber are not appropriately attached together during tire molding, which easily leads to a poor tire molding. Moreover, the content of the natural rubber in 100% by mass of the rubber component is less than 30% by mass, more preferably 25% by mass or less, further preferably 23% by mass or less. When the content of the natural rubber is 30% by mass or more, it becomes difficult to balance the molding processability with various tire performances, particularly fuel efficiency and abrasion resistance.

Styrene-butadiene rubber (SBR)

Examples of the SBR include, but not particularly limited to, an emulsion-polymerized SBR (E-SBR), a solution-polymerized SBR (S-SBR), and the like, and those obtained by modifying these SBRs with a modifying agent (modified SBRs), hydrogenated ones of these SBRs (hydrogenated SBRs), and the like can also be used. Among them, a S-SBR is preferable. These SBRs may be used alone, or two or more thereof may be used in combination.

Moreover, the modified SBRs may be those modified at a main chain and/or a terminal thereof with a modifying agent or those modified with a polyfunctional modification agent such as, for example, a tin tetrachloride and a silicon tetrachloride and partially having a branched structure. Among them, those modified with a modifying agent having a functional group that interacts with silica at a main chain and/or a terminal thereof are particularly preferable. By using such a modified styrene-butadiene rubber modified with a modifying agent and having a functional group that interacts with silica, fuel efficiency and wet grip performance can be further improved with good balance.

Examples of the S-SBR include S-SBRs manufactured and sold by JSR Corporation, Sumitomo Chemical Co., Ltd., Ube Industries, Ltd., Asahi Kasei Corporation, ZS Elastomer Co., Ltd., etc.

When the rubber composition of the cap tread comprises a SBR, a content of the SBR in 100% by mass of the rubber component is preferably 40% by mass or more, more preferably 50% by mass or more, further preferably 60% by mass or more. When the content of the SBR is 40% by mass or more, wet grip performance required for the tread rubber tends to be easily secured. Moreover, the content of the SBR in 100% by mass of the rubber component is preferably 85% by mass or less, more preferably 80% by mass or less, further preferably 75% by mass or less, particularly preferably 70% by mass or less. When the content of the SBR is 85% by mass or less, abrasion resistance and rolling resistance tend to be improved. Besides, when two or more types of SBR are used in combination, a total content of all SBRs shall be a content of SBRs in the rubber component.

Butadiene rubber (BR)

The BR is not particularly limited, and those common in the tire industry can be used such as, for example, a BR having a cis 1,4 bond content of less than 50% (a low cis BR), a BR having a cis 1,4 bond content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). Among them, it is more preferable to use a high cis BR from the viewpoint of abrasion resistance.

Examples of the high cis BR include, for example, high cis BRs manufactured and sold by JSR Corporation, Zeon Corporation, Ube Industries, Ltd., etc., and the like. Among high cis BRs, those having a cis 1,4 bond content of 95% or more are more preferable, and those having a cis 1,4 bond content of 97% or more are further preferable. They may be used alone, or two or more thereof may be used in combination. When a high cis BR is compounded, low temperature characteristics and abrasion resistance can be improved. A cis 1,4 bond content in a BR is a value calculated by infrared absorption spectrometry.

When the rubber composition of the cap tread comprises a BR, a content of the BR in 100% by mass of the rubber component is preferably 5% by mass or more, more preferably 10% by mass or more, further preferably 15% by mass or more. When the content of the BR is 5% by mass or more, a balance of abrasion resistance and rolling resistance tends to become improved. Moreover, the content of the BR in 100% by mass of the rubber component is preferably 50% by mass or less, more preferably 40% by mass or less, further preferably 30% by mass or less. When the content of the BR is 50% by mass or less, wet grip performance tends to become improved.

(Silica)

Silica is not particularly limited as long as it has a BET specific surface area ($N_2SA$) of 180 to 280 $m^2/g$, examples of which include, for example, a dry silica (anhydrous silica), a wet silica (hydrous silica), and the like, preferably a wet silica since it has many silanol groups and many reaction points with a silane coupling agent. Silica may be used alone, or two or more thereof may be used in combination. Examples of silica include, for example, silica manufactured and sold by Evonik Degussa GmbH, Solvay, Tosoh Silica Corporation, Tokuyama Corporation, etc.

A BET specific surface area of silica is 180 $m^2/g$ or more, preferably 190 $m^2/g$ or more, more preferably 195 $m^2/g$ or more. When the BET specific surface area of silica is less than 180 $m^2/g$, reinforcing property of a rubber required for a tire cannot be secured, and abrasion resistance cannot be secured. Moreover, the BET specific surface area of silica is 280 $m^2/g$ or less, preferably 270 $m^2/g$ or less, more preferably 260 $m^2/g$ or less, further preferably 235 $m^2/g$ or less. When the BET specific surface area of silica exceeds 280 $m^2/g$, processability deteriorates, which makes processing difficult. Besides, the BET specific surface area of silica in the present specification is a value measured by a BET method according to ASTM D3037-93.

A content of silica based on 100 parts by mass of the rubber component is 30 parts by mass or more, preferably 40 parts by mass or more, more preferably 50 parts by mass or more, further preferably 80 parts by mass or more. When the content of silica is less than 30 parts by mass, reinforcing property required for a tire cannot be obtained. Moreover, the content of silica based on 100 parts by mass of the rubber component is 120 parts by mass or less, preferably 110 parts by mass or less, more preferably 100 parts by mass or less. When the content of silica exceeds 120 parts by mass, processability deteriorates, which makes processing difficult.

(Silane coupling agent)

It is preferable to use a silane coupling agent for comprising silica. Examples of the silane coupling agent include, for example, sulfide-based silane coupling agents such as bis(3-triethoxysilylpropyl)disulfide and bis(3-triethoxysilylpropyl)tetrasulfide, mercapto-based silane coupling agents such as 3-mercaptopropyltrimethoxysilane, 3-mercaptopropyltriethoxysilane, a compound comprising a bond unit A represented by the following chemical formula (I) and a bond unit B represented by the following chemical formula (II), thioether-based silane coupling agents such as 3-octanoylthio-1-propyltriethoxysilane, 3-hexanoylthio-1-propyltriethoxysilane, and 3-octanoylthio-1-propyltrimethoxysilane, vinyl-based silane coupling agents such as vinyltriethoxysilane, amino-based silane coupling agents such as 3-aminopropyltriethoxysilane, glycidoxy-based silane coupling agents such as γ-glγcidoxypropyltriethoxysilane, nitro-based silane coupling agents such as 3-nitropropyltrimethoxysilane, and chloro-based silane coupling agents such as 3-chloropropyltrimethoxysilane. They may be used alone, or two or more thereof may be used in combination. Among them, a sulfide-based coupling agent, particularly bis(3-triethoxysilylpropyl)disulfide is preferable from the viewpoints of ease of temperature control of reaction with silica and an effect of improving reinforcing property of a rubber composition. Here, a mercapto-based coupling agent having a strong reactivity with silica, particularly a compound comprising a bond unit A represented by the following chemical formula (I) and a bond unit B represented by the following chemical formula (II) that will be described later is preferable from the viewpoint that the effects of the present disclosure can be exhibited more satisfactorily.

Hereinafter, a compound comprising a bond unit A represented by the following chemical formula (I) and a bond unit B represented by the following chemical formula (II) will be described.

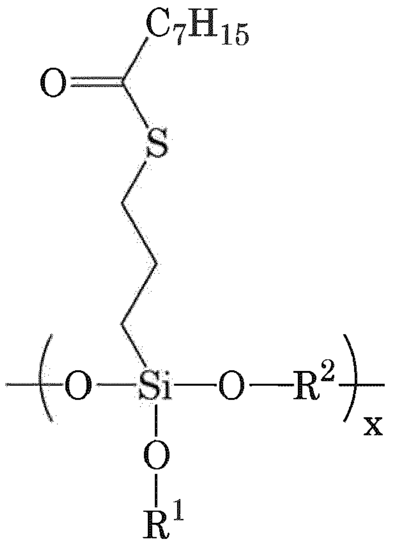

(I)

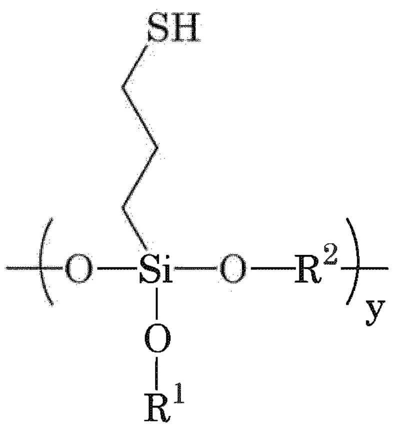

(II)

(where x is an integer of 0 or more, and y is an integer of 1 or more. $R^1$ represents hydrogen, a halogen, a branched or non-branched alkyl group having 1 to 30 carbon atoms, a branched or non-branched alkenyl group having 2 to 30 carbon atoms, a branched or non-branched alkynyl group having 2 to 30 carbon atoms, or a group in which hydrogen at terminal of the alkyl group is substituted with hydroxyl group or carboxyl group. $R^2$ represents a branched or non-branched alkylene group having 1 to 30 carbon atoms, a branched or non-branched alkenylene group having 2 to 30 carbon atoms, or a branched or non-branched alkynylene group having 2 to 30 carbon atoms. $R^1$ and $R^2$ may together form a ring structure.)

By using the compound comprising a bond unit A represented by the following chemical formula (I) and a bond unit B represented by the following chemical formula (II), a viscosity rise during processing is suppressed as compared with a polysulfide silane such as bis-(3-triethoxysilylpropyl)tetrasulfide. It is considered that this is because a sulfide part of the bond unit A is a C-S-C bond and thus is thermally stable as compared with tetrasulfide or disulfide, thereby resulting in a small increase in Mooney viscosity.

Moreover, a scorch time is suppressed as compared with mercaptosilane such as 3-mercaptopropyltrimethoxysilane. A reason for this is considered that, though the bond unit B has a mercaptosilane structure, the $-C_7H_{15}$ portion of the bond unit A covers the -SH group of the bond unit B and thus it is difficult to react with a polymer, and therefore scorch (rubber burning) is less likely to occur.

From the viewpoint that the effects of the present disclosure can be obtained satisfactorily, in the silane coupling agent having the above-described structure, a content of the bond unit A is preferably 30 mol% or more, more preferably 50 mol% or more, and it is preferably 99 mol% or less, more preferably 90 mol% or less. Moreover, a content of the bond unit B is preferably 1 mol% or more, more preferably 5 mol% or more, further preferably 10 mol% or more, and it is preferably 70 mol% or less, more preferably 65 mol% or less, further preferably 55 mol% or less. Furthermore, a total content of the bond units A and B is preferably 95 mol% or more, more preferably 98 mol% or more, further preferably 100 mol%. Besides, the content of the bond units A and B is an amount including the case where the bond units A and B are located at the terminal of the silane coupling agent. A form where the bond units A and B are located at the terminal of the silane coupling agent is not particularly limited, as long as it forms units corresponding to the chemical formula (I) representing the bond unit A and the chemical formula (II) representing the bond unit B.

Examples of halogen of $R^1$ include chlorine, bromine, fluorine, and the like.

Examples of a branched or non-branched alkyl group having 1 to 30 carbon atoms of $R^1$ include a methyl group, an ethyl group, a n-propyl group, an isopropyl group, a n-butyl group, an iso-butyl group, a sec-butyl group, a tert-butyl group, a pentyl group, a hexyl group, a heptyl group, a 2-ethylhexyl group, an octyl group, a nonyl group, a decyl group, and the like. The alkyl group preferably has 1 to 12 carbon atoms.

Examples of a branched or non-branched alkenyl group having 2 to 30 carbon atoms of $R^1$ include a vinyl group, a 1-propenyl group, a 2-propenyl group, a 1-butenyl group, a 2-butenyl group, a 1-pentenyl group, a 2-pentenyl group, 1-hexenyl group, 2-hexenyl group, 1-octenyl group, and the like. The alkenyl group preferably has 2 to 12 carbon atoms.

Examples of a branched or non-branched alkynyl group having 2 to 30 carbon atoms of $R^1$ include an ethynyl group, a propynyl group, a butynyl group, a pentynyl group, a hexynyl group, a heptynyl group, an octynyl group, a nonynyl group, a decynyl group, an undecynyl group, a dodecynyl group, and the like. The alkynyl group preferably has 2 to 12 carbon atoms.

Examples of a branched or non-branched alkylene group having 1 to 30 carbon atoms of $R^2$ include an ethylene group, a propylene group, a butylene group, a pentylene group, a hexylene group, a heptylene group, an octylene group, a nonylene group, a decylene group, an undecylene group, a dodecylene group, a tridecylene group, a tetradecylene group, a pentadecylene group, a hexadecylene group, a heptadecylene group, an octadecylene group, and the like. The alkylene group preferably has 1 to 12 carbon atoms.

Examples of a branched or non-branched alkenylene group having 2 to 30 carbon atoms of $R^2$ include a vinylene group, a 1-propenylene group, a 2-propenylene group, a 1-butenylene group, a 2-butenylene group, a 1-pentenylene group, a 2-pentenylene group, 1-hexenylene group, 2-hexenylene group, 1-octenylene group, and the like. The alkenylene group preferably has 2 to 12 carbon atoms.

Examples of a branched or non-branched alkynylene group having 2 to 30 carbon atoms of $R^2$ include an ethynylene group, a propynylene group, a butynylene group, a pentynylene group, a hexynylene group, a heptynylene group, an octynylene group, a nonynylene group, a decynylene group, an undecynylene group, a dodecynylene group, and the like. The alkynylene group preferably has 2 to 12 carbon atoms.

In the silane coupling agent having the above-described structure, a total number of repetitions (x + y) of the number of repetitions of the bond unit A (x) and the number of repetitions of the bond unit B (y) is preferably in a range of 3 to 300. Within this range, mercaptosilane of the bond unit B is covered with $-C_7H_{15}$ of the bond unit A, so that shortening of the scorch time can be suppressed, and a good reactivity with silica and rubber components can be secured.

As the silane coupling agent having the above-described structure, for example, one manufactured by Momentive Performance Materials can be used.

When the rubber composition comprises a silane coupling agent, a content of the silane coupling agent is preferably 1 part by mass or more, more preferably 2 parts by mass or more, based on 100 parts by mass of silica. When the content of the silane coupling agent is 1 part by mass or more, viscosity of an unvulcanized rubber composition tends to be suppressed, and deterioration of processability tends to be suppressed. Moreover, the content of the silane coupling agent based on 100 parts by mass of silica is preferably 20 parts by mass or less, more preferably 15 parts by mass or less. When the content of the silane coupling agent is 20 parts by mass or less, there is a tendency that a compounding effect of the silane coupling agent commensurate with cost can be obtained.

(Other compounding agents)

The rubber composition for cap tread can appropriately comprise rubber components other than diene-based rubbers, and compounding agents commonly used in the conventional rubber industry, for example, reinforcing fillers other than silica, various softening agents, a tackifying resin, various antioxidants, wax, zinc oxide, stearic acid, a vulcanizing agent, a vulcanization accelerator, and the like, as necessary, in addition to the above-described components.

(Reinforcing fillers other than silica)

As reinforcing fillers other than silica, those conventionally used in the tire industry such as, carbon black, calcium carbonate, alumina, clay, and talc can be compounded. When those other than silica are used as reinforcing fillers, carbon black is preferable from the viewpoint of rubber strength. That is, it is more preferable to comprise silica and carbon black as reinforcing fillers, and more preferable to comprise silica and carbon black only.

Carbon black

Carbon black is not particularly limited, and GPF, FEF, HAF, ISAF, SAF, and the like can be used alone, or two or more thereof can be used in combination. Examples of carbon black include carbon black manufactured and sold by Asahi Carbon Co., Ltd., Cabot Japan K.K., Tokai Carbon Co., Ltd., Mitsubishi Chemical Corporation, Lion Corporation, Nippon

Steel Chemical Carbon Co., Ltd., Columbian Carbon Japan Ltd., etc.

A nitrogen adsorption specific surface area ($N_2SA$) of carbon black is preferably 80 $m^2/g$ or more, more preferably 100 $m^2/g$ or more, further preferably 110 $m^2/g$ or more. Moreover, the $N_2SA$ is preferably 300 $m^2/g$ or less, more preferably 250 $m^2/g$ or less. Besides, the $N_2SA$ of carbon black can be measured according to JIS K 6217-2: "Carbon black for rubber industry-Fundamental characteristics-Part 2: Determination of specific surface area-Nitrogen adsorption methods-Single-point procedures".

A content of carbon black when compounded based on 100 parts by mass of the rubber component is preferably 1 part by mass or more, more preferably 5 parts by mass or more, based on 100 parts by mass of the rubber component. Moreover, the content of carbon black based on 100 parts by mass of the rubber component is preferably 50 parts by mass or less, more preferably 30 parts by mass or less. When the content of carbon black is within the above-described ranges, good fuel efficiency and weather resistance can be obtained.

<Softening agent>

Examples of the softening agent include petroleum-based softening agents such as oil, a lubricating oil, paraffin, a liquid paraffin, a petroleum asphalt, and vaseline, fatty oil-based softening agents such as a soybean oil, a palm oil, a castor oil, a flaxseed oil, a rapeseed oil, and a coconut oil, wax such as a tall oil, factice, beeswax, a carnauba wax, and lanolin, fatty acids such as linoleic acid, palmitic acid, stearic acid, and lauric acid, a liquid polymer, a low-temperature plasticizer, and the like. A total compounding amount of softening agents is preferably 50 parts by mass or less based on 100 parts by mass of the rubber component. In this case, there is little risk of deteriorating wet grip performance.

Oil

Examples of oil include, for example, process oils such as paraffin-based, aroma-based, and naphthene-based process oils.

A content of oil when compounded based on 100 parts by mass of the rubber component is preferably 10 parts by mass or more, more preferably 15 parts by mass or more. Moreover, the content of oil is preferably 60 parts by mass or less, more preferably 55 parts by mass or less, based on 100 parts by mass of the rubber component. When the content of oil is within the above-described ranges, an effect of compounding oil can be sufficiently obtained, and a good abrasion resistance can be obtained. Besides, in the present specification, the content of oil also includes an amount of oil contained in an oil-extended rubber.

Liquid polymer

Examples of the liquid polymer include, for example, a liquid SBR, a liquid BR, a liquid IR, a liquid SIR, and the like. Among them, it is particularly preferable to use a liquid SBR because it can improve durability and grip performance with good balance.

Low-temperature plasticizer

Examples of the low-temperature plasticizer include, for example, liquid components such as dioctyl phthalate (DOP), dibutyl phthalate (DBP), tris(2-ethylhexyl)phosphate (TOP), and bis(2-ethylhexyl)sebacate (DOS).

(Tackifying resin)

Examples of the tackifying resin include a cyclopentadiene-based resin, a coumarone resin, a petroleum-based resin (an aliphatic petroleum resin, an aromatic petroleum resin, an alicyclic petroleum resin, etc.), a phenol-based resin, a rosin derivative, and the like.

Examples of the aromatic petroleum resin include, for example, the following aromatic vinyl-based resins and C9-based petroleum resins other than the aromatic vinyl-based resins, and the like.

The aromatic vinyl-based resin may include a homopolymer of an aromatic vinyl monomer (unit) and a copolymer of two or more kinds of the aromatic vinyl monomers which includes, for example, styrene, α-methylstyrene, 1-vinylnaphthalene, 3-vinyltoluene, ethylvinylbenzene, divinylbenzene, 4-cyclohexylstyrene, 2,4,6-trimethylstyrene, and the like. Moreover, those obtained by modifying them may be used.

A content of the tackifying resin when compounded based on 100 parts by mass of the rubber component is preferably 1 part by mass or more, more preferably 2 parts by mass or more, further preferably 3 parts by mass or more, from the viewpoints of wet grip performance and dry grip performance. Moreover, the content of the tackifying resin, particularly the aromatic vinyl-based resin, based on 100 parts by mass of the rubber component is preferably 30 parts by

mass or less, more preferably 20 parts by mass or less, further preferably 15 parts by mass or less, from the viewpoints of abrasion resistance, fuel efficiency, and brittle fracture at a low temperature.

(Antioxidant)

The antioxidant is not particularly limited, and for example, amine-based, phenol-based, and imidazole-based compounds, and antioxidants such as a carbamic acid metal salt can be appropriately selected and compounded as antioxidants, which may be used alone or two or more of which may be used in combination. Among them, an amine-based antioxidant is preferable because it has a high antiaging effect, p-phenylenediamine-based antioxidants are more preferable such as N-(1,3-dimethylbutyl)-N'-phenyl-p-phenylenediamine,

N-isopropyl-N'-phenyl-p-phenylenediamine,
N,N'-diphenyl-p-phenylenediamine,
N,N'-di-2-naphthyl-p-phenylenediamine,
N-cyclohexyl-N'-phenyl-p-phenylenediamine,
N,N'-bis(1-methylheptyl)-p-phenylenediamine,
N,N'-bis(1,4-dimethylpentyl)-p-phenylenediamine,
N,N'-bis(1-ethyl-3-methylpentyl)-p-phenylenediamine,
N-4-methyl-2-pentyl-N'-phenyl-p-phenylenediamine,
N,N'-diaryl-p-phenylenediamine, hindered diaryl-p-phenylenediamine, phenylhexyl-p-phenylenediamine, and phenyloctyl-p-phenylenediamine, and N-(1,3-dimethylbutyl)-N'-phenyl-p-phenylenediamine is particularly preferable.

A content of the antioxidant when compounded based on 100 parts by mass of the rubber component is preferably 0.5 parts by mass or more, more preferably 1 part by mass or more. Moreover, the content of the antioxidant based on 100 parts by mass of the rubber component is preferably 5 parts by mass or less, more preferably 3 parts by mass or less. When the content of the antioxidant is within the above-described ranges, an antiaging effect can be sufficiently obtained, and discoloration due to precipitation of the antioxidant on a tire surface tends to be suppressed.
As stearic acid, zinc oxide, wax, etc., those conventionally used in the rubber industry can be used.

(Vulcanizing agent)

The rubber composition can comprise a vulcanizing agent. As the vulcanizing agent, an organic peroxide or a sulfur-based vulcanizing agent can be used. As the organic peroxide, for example, benzoyl peroxide, dicumyl peroxide, di-t-butyl peroxide, t-butyl cumyl peroxide, methyl ethyl ketone peroxide, cumene hydroperoxide,

2,5-dimethyl-2,5-di(t-butylperoxy)hexane,
2,5-dimethyl-2,5-di(benzoylperoxy)hexane,
2,5-dimethyl-2,5-di(t-butylperoxy)hexin-3,
1,3-bis(t-butylperoxypropyl)benzene, or the like can be used. Moreover, as the sulfur-based vulcanizing agent, for example, sulfur, morpholine disulfide, or the like can be used. Among them, sulfur is preferable.

A content of the vulcanizing agent when compounded based on 100 parts by mass of the rubber component is preferably 0.5 parts by mass or more, more preferably 1 part by mass or more. Moreover, the content of the vulcanizing agent based on 100 parts by mass of the rubber component is 5 parts by mass or less, preferably 3 parts by mass or less. When the content of the vulcanizing agent is within the above-described ranges, an appropriate fracture characteristics can be obtained, and abrasion resistance tends to become improved.

(Vulcanization accelerator)

Examples of the vulcanization accelerator include, but not particularly limited to, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators, and among them, it is preferable to comprise sulfenamide-based vulcanization accelerators and guanidine-based vulcanization accelerators, and it is more preferable to comprise sulfenamide-based vulcanization accelerators and guanidine-based vulcanization accelerators only, from the viewpoint that the effects of the present disclosure can be obtained more appropriately.
Examples of the sulfenamide-based vulcanization accelerator include CBS (N-cyclohexyl-2-benzothiazyl sulfenamide), TBBS (N-t-butyl-2-benzothiazyl sulfenamide), N-oxyethylene-2-benzothiazyl sulfenamide, N,N'-diisopropyl-2-benzothiazyl sulfenamide, N,N-dicyclohexyl-2-benzothiazyl sulfenamide, and the like. Examples of the thiazole-based vulcanization accelerator include 2-mercaptobenzothiazole, dibenzothiazolyl disulfide, and the like. Examples of the thiuram-based vulcanization accelerator include tetramethylthiuram monosulfide, tetramethylthiuram disulfide, tetrabenzylthiuram disulfide (TBzTD), and the like. Examples of the guanidine-based vulcanization accelerator include diphenylguanidine (DPG), diorthotrilguanidine, orthotrilbiguanidine, and the like. They may be used alone, or two or more thereof may be used in combination. Among them, it is preferable to use CBS and DPG in combination from the viewpoint that the effects of the present disclosure can be obtained more appropriately.

A content of the vulcanization accelerator when compounded based on 100 parts by mass of the rubber component is preferably 0.1 parts by mass or more, more preferably 0.3 parts by mass or more, further preferably 0.5 parts by mass or more. The content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, an appropriate fracture characteristics can be obtained, and abrasion resistance tends to become improved.

<Rubber composition for base tread>

(Rubber component)

Examples of the rubber component used in the rubber composition for base tread include, but not particularly limited to, diene-based rubbers such as a natural rubber, an isoprene rubber (IR), a butadiene rubber (BR), a styrene-butadiene rubber (SBR), an acrylonitrile-butadiene rubber (NBR), and a chloroprene rubber (CR), and a butyl rubber (IIR). These rubber components may be used alone, or two or more thereof may be used in combination. Among them, a BR is preferably used from the viewpoints of excellent rolling resistance, crack growth resistance, and elongation at break, and a natural rubber is preferably used from the viewpoint of an excellent elongation at break. Moreover, it is more preferable to use a BR and a natural rubber in combination from the viewpoints of excellent rolling resistance, crack growth resistance, and elongation at break.

Natural rubber

Examples of the natural rubber include a modified natural rubber (modified NR) such as an epoxidized natural rubber (ENR), a hydrogenated natural rubber (HNR), a deproteinized natural rubber (DPNR), and an ultra pure natural rubber, and the like, in addition to the natural rubber (NR).

The NR is not particularly limited, and those common in the rubber industry such as SIR20, RSS#3, and TSR20 can be used.

When the rubber composition of the base tread comprises a natural rubber, a content of the natural rubber in 100% by mass of the rubber component is preferably 50% by mass or more, more preferably 60% by mass or more, further preferably 70% by mass or more. When the content of the natural rubber is 50% by mass or more, a sufficient rubber strength tends to be obtained. Moreover, the content of the natural rubber in 100% by mass of the rubber component is preferably 95% by mass or less, more preferably 85% by mass or less, further preferably 80% by mass or less. When the content of the natural rubber is 95% by mass or less, ozone resistance tends to be less likely to deteriorate.

Butadiene rubber (BR)

The BR is not particularly limited, and those common in the tire industry can be used such as, for example, a BR having a cis 1,4 bond content of less than 50% (a low cis BR), a BR having a cis 1,4 bond content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). Among them, it is more preferable to use a high cis BR from the viewpoint of abrasion resistance.

Examples of the high cis BR include, for example, high cis BRs manufactured and sold by JSR Corporation, Zeon Corporation, Ube Industries, Ltd., etc., and the like. Among high cis BRs, those having a cis 1,4 bond content of 95% or more are more preferable, and those having a cis 1,4 bond content of 97% or more are further preferable. They may be used alone, or two or more thereof may be used in combination. When a high cis BR is compounded, low temperature characteristics and abrasion resistance can be improved. A cis 1,4 bond content in a BR is a value calculated by infrared absorption spectrometry.

When the rubber composition of the base tread comprises a BR, a content of the BR in 100% by mass of the rubber component is preferably 5% by mass or more, more preferably 10% by mass or more, further preferably 15% by mass or more. When the content of the BR is 5% by mass or less, a balance of abrasion resistance and rolling resistance

tends to become improved. Moreover, the content of the BR in 100% by mass of the rubber component is preferably 50% by mass or less, more preferably 40% by mass or less, further preferably 30% by mass or less. When the content of the BR is 50% by mass or less, wet grip performance tends to become improved.

(Other compounding agents)

The rubber composition for base tread can appropriately comprise rubber components other than diene-based rubbers, and compounding agents commonly used in the conventional rubber industry, for example, reinforcing fillers, various softening agents, a tackifying resin, various antioxidants, wax, zinc oxide, stearic acid, a vulcanizing agent, a vulcanization accelerator, and the like, as necessary, in addition to the above-described rubber components.

(Reinforcing filler)

As reinforcing fillers, those conventionally used in the tire industry such as, carbon black, silica, calcium carbonate, alumina, clay, and talc can be compounded. Among them, carbon black is preferable from the viewpoint that the effects of the present disclosure can be obtained more appropriately.

Carbon black

Carbon black is not particularly limited, and GPF, FEF, HAF, ISAF, SAF, and the like can be used alone, or two or more thereof can be used in combination. Examples of carbon black include carbon black manufactured and sold by Asahi Carbon Co., Ltd., Cabot Japan K.K., Tokai Carbon Co., Ltd., Mitsubishi Chemical Corporation, Lion Corporation, Nippon Steel Chemical Carbon Co., Ltd., Columbian Carbon Japan Ltd., etc.

A nitrogen adsorption specific surface area ($N_2SA$) of carbon black is preferably 80 $m^2$/g or more, more preferably 100 $m^2$/g or more, further preferably 110 $m^2$/g or more. Moreover, the $N_2SA$ is preferably 300 $m^2$/g or less, more preferably 250 $m^2$/g or less. Besides, the $N_2SA$ of carbon black can be measured according to JIS K 6217-2: "Carbon black for rubber industry-Fundamental characteristics-Part 2: Determination of specific surface area-Nitrogen adsorption methods-Single-point procedures".

A content of carbon black when compounded based on 100 parts by mass of the rubber component is preferably 10 parts by mass or more, more preferably 20 parts by mass or more, based on 100 parts by mass of the rubber component. Moreover, the content of carbon black based on 100 parts by mass of the rubber component is preferably 80 parts by mass or less, more preferably 60 parts by mass or less. When the content of carbon black is within the above-described ranges, good fuel efficiency and weather resistance tend to be obtained.

<Softening agent>

Examples of the softening agent include petroleum-based softening agents such as oil, a lubricating oil, paraffin, a liquid paraffin, a petroleum asphalt, and vaseline, fatty oil-based softening agents such as a soybean oil, a palm oil, a castor oil, a flaxseed oil, a rapeseed oil, and a coconut oil, wax such as a tall oil, factice, beeswax, a carnauba wax, and lanolin, fatty acids such as linoleic acid, palmitic acid, stearic acid, and lauric acid, a liquid polymer, a low-temperature plasticizer, and the like. A compounding amount of the softening agent is preferably 100 parts by mass or less based on 100 parts by mass of the rubber component.

Oil

Examples of oil include, for example, process oils such as paraffin-based, aroma-based, and naphthene-based process oils.

A content of oil when compounded based on 100 parts by mass of the rubber component is preferably 1 part by mass or more, more preferably 4 parts by mass or more, further preferably 10 parts by mass or more, particularly preferably 15 parts by mass or more. Moreover, the content of oil is preferably 60 parts by mass or less, more preferably 55 parts by mass or less, based on 100 parts by mass of the rubber component. When the content of oil is within the above-described ranges, an effect of compounding oil can be sufficiently obtained, and a good abrasion resistance can be obtained. Besides, in the present specification, the content of oil also includes an amount of oil contained in an oil-extended rubber.

Liquid polymer

Examples of the liquid polymer include, for example, a liquid SBR, a liquid BR, a liquid IR, a liquid SIR, and the like. Among them, it is particularly preferable to use a liquid SBR because it can improve durability and grip performance with

good balance.

Low-temperature plasticizer

Examples of the low-temperature plasticizer include, for example, liquid components such as dioctyl phthalate (DOP), dibutyl phthalate (DBP), tris(2-ethylhexyl)phosphate (TOP), and bis(2-ethylhexyl)sebacate (DOS).

(Tackifying resin)

Examples of the tackifying resin include a cyclopentadiene-based resin, a coumarone resin, a petroleum-based resin (an aliphatic petroleum resin, an aromatic petroleum resin, an alicyclic petroleum resin, etc.), a phenol-based resin, a rosin derivative, and the like.

Examples of the aromatic petroleum resin include, for example, the following aromatic vinyl-based resins and C9-based petroleum resins other than the aromatic vinyl-based resins, and the like.

The aromatic vinyl-based resin may include a homopolymer of an aromatic vinyl monomer (unit) and a copolymer of two or more kinds of the aromatic vinyl monomers which includes, for example, styrene, $\alpha$-methylstyrene, 1-vinylnaphthalene, 3-vinyltoluene, ethylvinylbenzene, divinylbenzene, 4-cyclohexylstyrene, 2,4,6-trimethylstyrene, and the like. Moreover, those obtained by modifying them may be used.

A content of the tackifying resin when compounded based on 100 parts by mass of the rubber component is preferably 1 part by mass or more, more preferably 2 parts by mass or more, further preferably 3 parts by mass or more, particularly preferably 4 parts by mass or more, from the viewpoint of molding processability. Moreover, the content of the tackifying resin, particularly the aromatic vinyl-based resin, based on 100 parts by mass of the rubber component is preferably 30 parts by mass or less, more preferably 20 parts by mass or less, further preferably 15 parts by mass or less, from the viewpoints of abrasion resistance, fuel efficiency, and brittle fracture at a low temperature.

(Antioxidant)

The antioxidant is not particularly limited, and for example, amine-based, phenol-based, and imidazole-based compounds, and antioxidants such as a carbamic acid metal salt can be appropriately selected and compounded as antioxidants, which may be used alone or two or more of which may be used in combination. Among them, an amine-based antioxidant is preferable because it has a high antiaging effect, p-phenylenediamine-based antioxidants are more preferable such as N-(1,3-dimethylbutyl)-N'-phenyl-p-phenylenediamine,

N-isopropyl-N'-phenyl-p-phenylenediamine,
N,N'-diphenyl-p-phenylenediamine,
N,N'-di-2-naphthyl-p-phenylenediamine,
N-cyclohexyl-N'-phenyl-p-phenylenediamine,
N,N'-bis(1-methylheptyl)-p-phenylenediamine,
N,N'-bis(1,4-dimethylpentyl)-p-phenylenediamine,
N,N'-bis(1-ethyl-3-methylpentyl)-p-phenylenediamine,
N-4-methyl-2-pentyl-N'-phenyl-p-phenylenediamine,
N,N'-diaryl-p-phenylenediamine, hindered diaryl-p-phenylenediamine, phenylhexyl-p-phenylenediamine, and phenyloctyl-p-phenylenediamine, and N-(1,3-dimethylbutyl)-N'-phenyl-p-phenylenediamine is particularly preferable.

A content of the antioxidant when compounded based on 100 parts by mass of the rubber component is preferably 0.5 parts by mass or more, more preferably 1 part by mass or more. Moreover, the content of the antioxidant based on 100 parts by mass of the rubber component is preferably 5 parts by mass or less, more preferably 3 parts by mass or less. When the content of the antioxidant is within the above-described ranges, an antiaging effect can be sufficiently obtained, and discoloration due to precipitation of the antioxidant on a tire surface tends to be suppressed.

As stearic acid, zinc oxide, wax, etc., those conventionally used in the rubber industry can be used.

(Vulcanizing agent)

The rubber composition can comprise a vulcanizing agent. As the vulcanizing agent, an organic peroxide or a sulfur-based vulcanizing agent can be used. As the organic peroxide, for example, benzoyl peroxide, dicumyl peroxide, di-t-butyl peroxide, t-butyl cumyl peroxide, methyl ethyl ketone peroxide, cumene hydroperoxide,

2,5-dimethyl-2,5-di(t-butylperoxy)hexane,

2,5-dimethyl-2,5-di(benzoylperoxy)hexane,
2,5-dimethyl-2,5-di(t-butylperoxy)hexin-3,
1,3-bis(t-butylperoxypropyl)benzene, or the like can be used. Moreover, as the sulfur-based vulcanizing agent, for example, sulfur, morpholine disulfide, or the like can be used. Among them, sulfur is preferable.

A content of the vulcanizing agent when compounded based on 100 parts by mass of the rubber component is preferably 0.5 parts by mass or more, more preferably 1 part by mass or more. Moreover, the content of the vulcanizing agent based on 100 parts by mass of the rubber component is preferably 5 parts by mass or less, more preferably 3 parts by mass or less. When the content of the vulcanizing agent is within the above-described ranges, an appropriate fracture characteristics can be obtained, and abrasion resistance tends to become improved.

(Vulcanization accelerator)

Examples of the vulcanization accelerator include, but not particularly limited to, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators, and among them, sulfenamide-based vulcanization accelerators are preferable from the viewpoint that the effects of the preset disclosure can be obtained more appropriately.

Examples of the sulfenamide-based vulcanization accelerator include CBS (N-cyclohexyl-2-benzothiazyl sulfenamide), TBBS (N-t-butyl-2-benzothiazyl sulfenamide), N-oxyethylene-2-benzothiazyl sulfenamide, N,N'-diisopropyl-2-benzothiazyl sulfenamide, N,N-dicyclohexyl-2-benzothiazyl sulfenamide, and the like. Examples of the thiazole-based vulcanization accelerator include 2-mercaptobenzothiazole, dibenzothiazolyl disulfide, and the like. Examples of the thiuram-based vulcanization accelerator include tetramethylthiuram monosulfide, tetramethylthiuram disulfide, tetrabenzylthiuram disulfide (TBzTD), and the like. Examples of the guanidine-based vulcanization accelerator include diphenylguanidine (DPG), diorthotrilguanidine, orthotrilbiguanidine, and the like. They may be used alone, or two or more thereof may be used in combination. Among them, it is preferable to use CBS from the viewpoint that the effects of the present disclosure can be obtained more appropriately.

A content of the vulcanization accelerator when compounded based on 100 parts by mass of the rubber component is preferably 0.1 parts by mass or more, more preferably 0.3 parts by mass or more, further preferably 0.5 parts by mass or more. The content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, an appropriate fracture characteristics can be obtained, and abrasion resistance tends to become improved.

<Producing method of rubber composition for cap tread and rubber composition for base tread>

Both the rubber composition for cap tread and the rubber composition for base tread can be produced by a general method. For example, it can be produced by a method of kneading components other than vulcanizing agents and vulcanization accelerators, of the above-described components, with a known kneading machine used in the general rubber industry such as a Banbury mixer, a kneader, and an open roll (a base kneading step), then adding the vulcanizing agents and the vulcanization accelerators to the mixture to further knead them (a finish kneading step) to obtain an unvulcanized rubber composition, and vulcanizing it, and the like.

A kneading condition is not particularly limited, but in the case of the rubber composition for cap tread, for the base kneading step, kneading at a discharge temperature from 140 to 160°C for 1 to 5 minutes is preferable, and for the finish kneading step, kneading until the temperature reaches 75 to 100°C for 1 to 5 minutes is preferable. In the case of the rubber composition for base tread, for the base kneading step, kneading at a discharge temperature from 140 to 160°C for 1 to 5 minutes is preferable, and for the finish kneading step, kneading until the temperature reaches 75 to 100°C for 1 to 5 minutes is preferable. A vulcanization condition is not particularly limited, but the rubber composition for cap tread and the rubber composition for base tread are usually molded into treads in an unvulcanized state to produce unvulcanized tires together with other members and vulcanize them, and therefore, the same condition is preferably used for both rubber compositions, i.e., vulcanizing at 140 to 180°C for 3 to 20 minutes is preferable.

<Pneumatic tire>

As mentioned above, the pneumatic tire of the present disclosure has a tread composed of a cap tread and a base tread, wherein the cap tread is formed of a rubber composition comprising 30 to 120 parts by mass of silica having 180 to 280 $m^2/g$ of a BET specific surface area based on 100 parts by mass of a rubber component comprising 10% by mass or more and less than 30% by mass of a natural rubber, and wherein a mass ratio C/B of the cap tread to the base tread

satisfies the inequality (1): 150≤C/B×100≤900, where C represents a ratio (% by mass) of a mass of the cap tread to a total mass of the tread, and B represents a ratio (% by mass) of a mass of the base tread to the total mass of the tread. This pneumatic tire can be used for general tires such as a tire for a passenger car, a high-performance tire for a passenger car, a heavy duty tire for truck, bus and the like, and a racing tire. Among them, a high-performance tire for a passenger car is preferable from the viewpoint of compounding with silica.

<Producing method of pneumatic tire>

The pneumatic tire of the present disclosure can be produced by a usual method using the above-mentioned unvulcanized rubber composition for cap tread and unvulcanized rubber composition for base tread. That is, the tire can be produced by extruding the unvulcanized rubber composition for cap tread and the unvulcanized rubber composition for base tread into a tread shape with an extrusion ratio of the unvulcanized rubber composition for cap tread and the unvulcanized rubber composition for base tread adjusted so that a mass ratio C/B of the cap tread to the base tread becomes 150≤C/B×100≤900 where C represents a ratio (% by mass) of a mass of the cap tread to a total mass of the tread, and B represents a ratio (% by mass) of a mass of the base tread to the total mass of the tread, attaching it together with other tire members on a tire molding machine, and molding them by a usual method to form an unvulcanized tire, followed by heating and pressurizing this unvulcanized tire in a vulcanizer. The tread can be formed also by a method of attaching sheet-shaped unvulcanized rubber composition for cap tread and unvulcanized rubber composition for base tread together into a predetermined shape.

EXAMPLE

Hereinafter, the present disclosure will be described based on Examples, though the present disclosure is not limited to these Examples.

Various chemicals used in Examples and Comparative examples are collectively shown below.

- · SBR: Nipol NS616 manufactured by ZS Elastomer Co., Ltd. (styrene content: 21% by mass)
- · BR: Nipol BR1220 manufactured by Zeon Corporation (cis 1,4 bond content: 97%)
- · NR: RSS#3
- · Modified NR: One produced by Production example 1 which will be described below
- · Carbon black: DIABLACK (Registered Trademark) N220 manufactured by Mitsubishi Chemical Corporation (nitrogen adsorption specific surface area ($N_2SA$): 115 $m^2/g$)
- · Silica 1: ULTRASIL (Registered Trademark) 9100GR manufactured by Evonik Degussa GmbH (BET specific surface area: 235 $m^2/g$, average primary particle size: 15 nm)
- · Silica 2: ULTRASIL (Registered Trademark) 5000GR manufactured by Evonik Degussa GmbH (BET specific surface area: 180 $m^2/g$, average primary particle size: 21 nm)
- · Silica 3: ULTRASIL (Registered Trademark) VN3 manufactured by Evonik Degussa GmbH (BET specific surface area: 175 $m^2/g$, average primary particle size: 18 nm)
- · Silane coupling agent 1: Si266 manufactured by Evonik Degussa GmbH (bis(3-triethoxysilylpropyl)disulfide)
- · Silane coupling agent 2: NXT-Z45 manufactured by Momentive Performance Materials (copolymer of bond unit A and bond unit B (bond unit A: 55 mol%, bond unit B: 45 mol%))
- · Zinc oxide: Zinc oxide No. 1 manufactured by Mitsui Mining & Smelting Co., Ltd.
- · Stearic acid: Bead stearic acid "CAMELLIA" manufactured by NOF CORPORATION
- · Oil: Process X-140 manufactured by Japan Energy Corporation
- · Antioxidant: Antigen 6C manufactured by Sumitomo Chemical Co., Ltd. (N-phenyl-N'-(1,3-dimethylbutyl) -p-phenylenediamine)
- · Wax: SUNNOC N manufactured by Ouchi Shinko Chemical Industry Co., Ltd.
- · Sulfur: Powdered sulfur manufactured by Karuizawa Sulfur Co, Ltd.
- · Vulcanization accelerator 1: Nocceler CZ manufactured by Ouchi Shinko Chemical Industry Co., Ltd. (N-cyclohexyl-2-benzothiazolysulfenamide)
- · Vulcanization accelerator 2: Nocceler D manufactured by Ouchi Shinko Chemical Industry Co., Ltd. (1,3-diphenylguanidine)

Production example 1 (Production of modified NR)

After a solid content concentration of a natural rubber latex (DRC) was adjusted to 30% (w/v), 25 g of 10% Emal-E27C aqueous solution and 50 g of 40% NaOH aqueous solution were added to 1000 g of the natural rubber latex (wet state) and a saponification reaction was performed at a room temperature for 48 hours to obtain a saponified natural rubber

latex. Water was added to this latex to dilute it to 15% (w/v) of DRC, and then formic acid was added with gentle stirring to adjust a pH to 4.0 and flocculate the latex. The flocculated rubber was pulverized, washed repeatedly with 1000 mL of water, and then dried at 90°C for 4 hours to obtain a solid rubber (modified NR).

For the solid rubber (modified NR) obtained in Production example 1 and the above-described NR (RSS#3), a nitrogen content, a phosphorus content, and a gel content rate were measured by the methods shown below. The results are shown in Table 1.

(Measurement of nitrogen content)

A nitrogen content was measured using CHN CORDER MT-5 (manufactured by Anatec Yanaco Corporation). For the measurement, first, using antipyrine as a standard substance, a calibration curve for determining a nitrogen content was prepared. Next, about 10 mg of sample of the modified NR obtained in Production example 1 or RSS#3 was weighed, and an average value was calculated from the results of three times of measurements to determine a nitrogen content of the sample.

(Measurement of phosphorus content)

A phosphorus content was calculated using an ICP emission spectrometer (ICPS-8100, manufactured by Shimadzu Corporation). Moreover, $^{31}$P-NMR measurement of phosphorus was conducted for a component extracted with chloroform from a raw rubber, then purified and dissolved in $CDCl_3$, using an NMR analyzer (400MHz, AV400M, manufactured by Bruker Japan K.K.) and regarding a measured peak of P atom in 80% phosphoric acid aqueous solution as a reference point (0 ppm).

(Measurement of gel content rate)

A raw rubber was cut into 1 mm × 1 mm and, further, 70.00 mg of sample were weighed out. 35 mL of toluene were added thereto, and the mixture was left to stand in a cool and dark place for 1 week. Next, the mixture was centrifuged to precipitate insoluble gel contents in toluene and remove soluble contents in a supernatant, and only the gel contents were solidified with methanol and then dried to measure a mass. A gel content rate (% by mass) was calculated by the following equation.

Gel content rate (% by mass) = [mass after drying (mg) / first sample mass (mg)] × 100

Table 1

| | Modified NR (Production example 1) | NR (RSS#3) |
|---|---|---|
| Nitrogen content (% by mass) | 0.12 | 0.33 |
| Phosphorus content (ppm) | 84 | 572 |
| Gel content rate (% by mass) | 5.5 | 26.9 |

Examples 1-1 to 11-4 and Comparative examples 1-9

(Production of unvulcanized rubber composition for cap tread)

According to the compounding formulations shown in Table 2, using a 16L Banbury mixer manufactured by Kobe Steel, Ltd., chemicals other than sulfur and vulcanization accelerators were charged and kneaded for 5 minutes so that a discharge temperature reached 160°C. Next, sulfur and vulcanization accelerators were added to the obtained kneaded product in the compounding amounts shown in Table 2 and then kneaded for 5 minutes until the temperature reached 80°C using the 16L Banbury mixer manufactured by Kobe Steel, Ltd. to obtain unvulcanized rubber compositions for cap tread A-1 to G corresponding to the cap compoundings A-1 to G, respectively.

(Production of vulcanized rubber composition for cap tread)

Each unvulcanized rubber composition for cap tread obtained above was press-vulcanized for 12 minutes under a condition of 170°C to obtain vulcanized rubber compositions for cap tread A-1 to G corresponding to the cap

compoundings A-1 to G, respectively.

Table 2

| Compounding amount (part be mass) | Cap compounding | | | | | | | | | | | | | | | | | | |
|---|---|---|---|---|---|---|---|---|---|---|---|---|---|---|---|---|---|---|---|
| | A-1 | A-2 | A-3 | A-4 | B-1 | B-2 | B-3 | B-4 | C-1 | C-2 | C-3 | C-4 | D | E | F-1 | F-2 | F-3 | F-4 | G |
| SBR | 60 | 60 | 60 | 60 | 60 | 60 | 60 | 60 | 60 | 60 | 60 | 60 | 70 | 45 | 60 | 60 | 60 | 60 | 60 |
| BR | 20 | 20 | 20 | 20 | 20 | 20 | 20 | 20 | 20 | 20 | 20 | 20 | 25 | 15 | 20 | 20 | 20 | 20 | 20 |
| NR | 20 | - | 20 | - | 20 | - | 20 | - | 20 | - | 20 | - | 5 | 40 | 20 | - | 20 | | 20 |
| Modified NR | - | 20 | - | 20 | - | 20 | - | 20 | - | 20 | - | 20 | - | - | - | 20 | | 20 | |
| Carbon black | 5 | 5 | 5 | 5 | 5 | 5 | 5 | 5 | 5 | 5 | 5 | 5 | 5 | 5 | 5 | 5 | 5 | 5 | 5 |
| Silica 1 | 80 | 80 | 80 | 80 | 50 | 50 | 50 | 50 | 100 | 100 | 100 | 100 | 80 | 80 | - | - | - | - | - |
| Silica 2 | - | - | - | - | - | - | - | - | - | - | - | - | - | - | 80 | 80 | 80 | 80 | - |
| Silica 3 | - | - | - | - | - | - | - | - | - | - | - | - | - | - | - | - | - | - | 80 |
| Oil | 35 | 35 | 35 | 35 | 35 | 35 | 35 | 35 | 35 | 35 | 35 | 35 | 35 | 35 | 35 | 35 | 35 | 35 | 35 |
| Silane coupling agent 1 | 8.0 | 8.0 | - | - | 5.0 | 5.0 | - | 5.0 | 10.0 | 10.0 | - | - | 8.0 | 8.0 | 4.8 | 4.8 | - | - | 6.4 |
| Silane coupling agent 2 | - | - | 8.0 | 8.0 | - | - | 5.0 | 5.0 | - | - | 10.0 | 10.0 | - | - | - | - | 4.8 | 4.8 | - |
| Antioxidant | 2 | 2 | 2 | 2 | 2 | 2 | 2 | 2 | 2 | 2 | 2 | 2 | 2 | 2 | 2 | 2 | 2 | 2 | 2 |
| Wax | 2 | 2 | 2 | 2 | 2 | 2 | 2 | 2 | 2 | 2 | 2 | 2 | 2 | 2 | 2 | 2 | 2 | 2 | 2 |
| Stearic acid | 1 | 1 | 1 | 1 | 1 | 1 | 1 | 1 | 1 | 1 | 1 | 1 | 1 | 1 | 1 | 1 | 1 | 1 | 1 |
| Zinc oxide | 2 | 2 | 2 | 2 | 2 | 2 | 2 | 2 | 2 | 2 | 2 | 2 | 2 | 2 | 2 | 2 | 2 | 2 | 2 |
| Sulfur | 2 | 2 | 2 | 2 | 2 | 2 | 2 | 2 | 2 | 2 | 2 | 2 | 2 | 2 | 2 | 2 | 2 | 2 | 2 |
| Vulcanization accelerator 1 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Vulcanization accelerator 2 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |

(Production of unvulcanized rubber composition for base tread)

According to the compounding formulations shown in Table 3, using the 16L Banbury mixer manufactured by Kobe Steel, Ltd., chemicals other than sulfur and vulcanization accelerators were charged and kneaded for 3 minutes so that a discharge temperature reached 160°C. Next, sulfur and vulcanization accelerators were added to the obtained kneaded product in the compounding amounts shown in Table 3 and then kneaded for 5 minutes until the temperature reached 80°C using the 16L Banbury mixer manufactured by Kobe Steel, Ltd. to obtain an unvulcanized rubber composition for base tread A corresponding to the base compounding A.

Table 3

| Compounding amount (part by mass) | Base compounding A |
|---|---|
| NR | 75 |
| BR | 25 |
| Carbon black | 40 |
| Oil | 10 |
| Antioxidant | 2 |
| Wax | 1.5 |
| Stearic acid | 3 |
| Zinc oxide | 3 |
| Sulfur | 2.2 |
| Vulcanization accelerator 1 | 1.4 |

(Production of pneumatic tire)

The obtained unvulcanized rubber compositions for cap tread A-1 to G and unvulcanized rubber composition for base tread A were extruded into a tread shape, respectively, with an extrusion ratio adjusted so as to be a C/B (cap/base) ratio in Tables 4 to 6, attached according to Tables 4 to 6 together with other members, and vulcanized at 170°C for 12 minutes, to obtain pneumatic tires (size 195/65R15) of Examples 1-1 to 11-4 and Comparative examples 1 to 9. Besides, in tables 4 to 6, C represents a ratio (% by mass) of a mass of the cap tread to a total mass of the tread, B represents a ratio (% by mass)of a mass of the base tread to the total mass of the tread, and a C/B ratio index is a value obtained by multiplying C/B by 100.

Evaluation

The pneumatic tire obtained in each Example and Comparative example was evaluated by the methods shown below in terms of fuel efficiency index, abrasion resistance index and tire weight index. Moreover, each of the unvulcanized rubber compositions for cap tread A-1 to G was evaluated by the methods shown below in terms of molding processability index. Furthermore, each of the vulcanized rubber composition for cap tread A-1 to G was subjected to a viscoelasticity test by the methods shown below. All results are shown in Tables 4-6.

<Fuel efficiency index>

Using a rolling resistance tester, rolling resistance when each tire was run with a rim of 15 × 6JJ, an internal pressure of 230 kPa, a load of 3.43 kN, and a speed at 80 km/h was measured, and the measurement was indicated as an index as Comparative example 1 being 100. The results show that the larger the index is, the better the fuel efficiency is. A performance target value shall be 94 or more for fuel efficiency index.

<Abrasion resistance index>

Each tire (size 195/65R15) was mounted on a domestic FF vehicle, and a groove depth of the tire tread part after running of 8000 km was measured to calculate a running distance when the groove depth of the tire was reduced by 1 mm, and the measurement was indicated as an index by the following equation. The larger the index is, the better the abrasion resistance is, and a target value shall be a value larger than 100.

(Abrasion resistance index) = (running distance when a groove of each tire was reduced by 1 mm) / (running distance when a groove of Comparative example 1 was reduced by 1 mm) × 100

<Tire weight index>

A weight of each tire was measured, and the measurement was indicated as an index as a weight of the tire of Comparative example 1 being 100. The results show that the larger the numerical value, the lighter the weight is.

<Molding processability (tack force) index>

Each of the unvulcanized rubber compositions for cap tread A-1 to G was extruded into a sheet having a thickness of 1 mm using a roll, and for the obtained rubber sheet, adhesiveness (tackiness) between a metal flat plate sensor and a rubber plate was measured using a tack tester ("Tack Tester II" manufactured by Toyo Seiki Seisaku-sho, Ltd.), and the measurement was indicated as an index as a value of Comparative example 1 being 100. The results show that the larger the index is, the higher the tack force is, the higher the adhesive force is, and the more excellent the molding processability is. However, since this numerical value depends on compounding formulation, there is no change as long as a compounding content does not change. A performance target value shall be 90 or more for molding processability index.

<Viscoelasticity test>

For each of the vulcanized rubber compositions for cap tread A-1 to G produced above, a complex elastic modulus $E^*_{70°C}$ and a loss tangent tan $\delta_{70°C}$ at 70°C were measured under a condition of an initial strain of 10%, a dynamic strain amplitude of 1%, and a frequency of 10 Hz using a viscoelastic spectrometer manufactured by Iwamoto Seisakusho Co., Ltd. The results show that the larger the $E^*_{70°C}$ is, the higher the rigidity is and the more excellent the steering stability and the durability are, and the smaller the tan $\delta_{70°C}$ is, the lower the rolling resistance is and the more excellent the fuel efficiency is. Performance target values are 1.9 to 9.5 MPa and 0.05 to 0.17 for $E^*_{70°C}$ and tan $\delta_{70°C}$, respectively.

Table 4

| | Example | | | | | | | | | | |
|---|---|---|---|---|---|---|---|---|---|---|---|
| | 1-1 | 2-1 | 3-1 | 4-1 | 5-1 | 6-1 | 7-1 | 8-1 | 9-1 | 10-1 | 11-1 |
| Tread composition | | | | | | | | | | | |
| Cap compounding | A-1 | A-1 | A-1 | A-1 | A-1 | B-1 | B-1 | C-1 | C-1 | F-1 | F-1 |
| Base compounding | A | A | A | A | A | A | A | A | A | A | A |
| C/B rate | 80/20 | 90/10 | 85/15 | 70/30 | 60/40 | 80/20 | 70/30 | 80/20 | 70/30 | 80/20 | 70/30 |
| C/B rate index | 400 | 900 | 567 | 233 | 150 | 400 | 233 | 400 | 233 | 400 | 233 |
| Evaluation | | | | | | | | | | | |
| Fuel efficiency index | 100 | 103 | 102 | 105 | 116 | 110 | 115 | 94 | 95 | 110 | 115 |
| Abrasion resistance index | 115 | 117 | 116 | 108 | 101 | 103 | 105 | 120 | 125 | 102 | 101 |
| Tire weight | 100 | 98 | 99 | 102 | 104 | 98 | 100 | 102 | 104 | 103 | 105 |
| Molding processability | 100 | 100 | 100 | 100 | 100 | 102 | 102 | 98 | 98 | 103 | 103 |
| $E^*_{70°C}$ | 6.7 | 6.7 | 6.7 | 6.7 | 6.7 | 3.0 | 3.0 | 9.5 | 9.5 | 5.0 | 5.0 |
| Tan $\delta_{70°C}$ | 0.14 | 0.14 | 0.14 | 0.14 | 0.14 | 0.08 | 0.08 | 0.17 | 0.17 | 0.13 | 0.13 |

| | Comparative example | | | | | | | | |
|---|---|---|---|---|---|---|---|---|---|
| | 1 | 2 | 3 | 4 | 5 | 6 | 7 | 8 | 9 |
| Tread composition | | | | | | | | | |
| Cap compounding | G | G | G | G | G | A-1 | A-1 | D | E |

(continued)

| | Comparative example | | | | | | | | |
|---|---|---|---|---|---|---|---|---|---|
| | 1 | 2 | 3 | 4 | 5 | 6 | 7 | 8 | 9 |
| Tread composition | | | | | | | | | |
| Base compounding | A | A | A | A | A | A | A | A | A |
| C/B rate | 80/20 | 90/10 | 70/30 | 60/40 | 50/50 | 95/5 | 50/50 | 80/20 | 80/20 |
| C/B rate index | 400 | 900 | 233 | 150 | 100 | 1900 | 100 | 400 | 400 |
| Evaluation | | | | | | | | | |
| Fuel efficiency index | 100 | 92 | 107 | 114 | 126 | 88 | 124 | 103 | 90 |
| Abrasion resistance index | 100 | 110 | 93 | 86 | 79 | 125 | 94 | 113 | 118 |
| Tire weight | 100 | 98 | 102 | 104 | 106 | 97 | 106 | 101 | 99 |
| Molding processability | 100 | 100 | 100 | 100 | 100 | 100 | 100 | 70 | 110 |
| $E^*_{70°C}$ | 1.8 | 1.8 | 1.8 | 1.8 | 1.8 | 6.7 | 6.7 | 6.0 | 6.0 |
| $\tan\delta_{70°C}$ | 0.10 | 0.10 | 0.10 | 0.10 | 0.10 | 0.14 | 0.14 | 0.18 | 0.19 |

Table 5

| | Example | | | | | | | | |
|---|---|---|---|---|---|---|---|---|---|
| | 1-2 | 1-3 | 1-4 | 2-2 | 2-3 | 2-4 | 3-2 | 3-3 | 3-4 |
| Tread composition | | | | | | | | | |
| Cap compounding | A-2 | A-3 | A-4 | A-2 | A-3 | A-4 | A-2 | A-3 | A-4 |
| Base compounding | A | A | A | A | A | A | A | A | A |
| C/B rate | 80/20 | 80/20 | 80/20 | 90/10 | 90/10 | 90/10 | 85/15 | 85/15 | 85/15 |
| C/B rate index | 400 | 400 | 400 | 900 | 900 | 900 | 567 | 567 | 567 |
| Evaluation | | | | | | | | | |
| Fuel efficiency index | 101 | 105 | 107 | 104 | 108 | 110 | 103 | 107 | 109 |
| Abrasion resistance index | 117 | 120 | 124 | 119 | 122 | 126 | 118 | 121 | 125 |
| Tire weight | 100 | 100 | 100 | 98 | 98 | 98 | 99 | 99 | 99 |
| Molding processability | 106 | 104 | 105 | 104 | 102 | 103 | 105 | 103 | 104 |
| $E^*_{70°C}$ | 6.7 | 4.7 | 5.7 | 6.7 | 4.7 | 5.7 | 6.7 | 4.7 | 5.7 |
| $\tan\delta_{70°C}$ | 0.13 | 0.10 | 0.10 | 0.13 | 0.10 | 0.10 | 0.13 | 0.10 | 0.10 |

| | Example | | | | | |
|---|---|---|---|---|---|---|
| | 4-2 | 4-3 | 4-4 | 5-2 | 5-3 | 5-4 |
| Tread composition | | | | | | |
| Cap compounding | A-2 | A-3 | A-4 | A-2 | A-3 | A-4 |
| Base compounding | A | A | A | A | A | A |
| C/B rate | 70/30 | 70/30 | 70/30 | 60/40 | 60/40 | 60/40 |
| C/B rate index | 233 | 233 | 233 | 150 | 150 | 150 |
| Evaluation | | | | | | |
| Fuel efficiency index | 106 | 110 | 112 | 117 | 121 | 123 |
| Abrasion resistance index | 110 | 113 | 117 | 103 | 106 | 111 |
| Tire weight | 102 | 102 | 102 | 104 | 104 | 104 |
| Molding processability | 107 | 105 | 106 | 108 | 106 | 107 |

(continued)

| | | | | | | |
|---|---|---|---|---|---|---|
| Evaluation | | | | | | |
| E* $_{70°C}$ | 6.7 | 4.7 | 5.7 | 6.7 | 4.7 | 5.7 |
| Tan δ $_{70°C}$ | 0.13 | 0.10 | 0.10 | 0.13 | 0.10 | 0.10 |

Table 6

| | Example | | | | | | | | |
|---|---|---|---|---|---|---|---|---|---|
| | 6-2 | 6-3 | 6-4 | 7-2 | 7-3 | 7-4 | 8-2 | 8-3 | 8-4 |
| Tread composition | | | | | | | | | |
| Cap compounding | B-2 | B-3 | B-4 | B-2 | B-3 | B-4 | C-2 | C-3 | C-4 |
| Base compounding | A | A | A | A | A | A | A | A | A |
| C/B rate | 80/20 | 80/20 | 80/20 | 70/30 | 70/30 | 70/30 | 80/20 | 80/20 | 80/20 |
| C/B rate index | 400 | 400 | 400 | 233 | 233 | 233 | 400 | 400 | 400 |
| Evaluation | | | | | | | | | |
| Fuel efficiency index | 111 | 115 | 117 | 116 | 120 | 122 | 95 | 99 | 101 |
| Abrasion resistance index | 105 | 108 | 112 | 107 | 110 | 114 | 122 | 125 | 129 |
| Tire weight | 98 | 98 | 98 | 100 | 100 | 100 | 102 | 102 | 102 |
| Molding processability | 108 | 106 | 107 | 108 | 106 | 107 | 104 | 102 | 103 |
| E* $_{70°C}$ | 3.9 | 1.9 | 2.9 | 3.9 | 1.9 | 2.9 | 8.8 | 6.8 | 7.8 |
| Tan δ $_{70°C}$ | 0.08 | 0.05 | 0.05 | 0.08 | 0.05 | 0.05 | 0.15 | 0.12 | 0.12 |

| | Example | | | | | | | | |
|---|---|---|---|---|---|---|---|---|---|
| | 9-2 | 9-3 | 9-4 | 10-2 | 10-3 | 10-4 | 11-2 | 11-3 | 11-4 |
| Tread composition | | | | | | | | | |
| Cap compounding | C-2 | C-3 | C-4 | F-2 | F-3 | F-4 | F-2 | F-3 | F-4 |
| Base compounding | A | A | A | A | A | A | A | A | A |
| C/B rate | 70/30 | 70/30 | 70/30 | 80/20 | 80/20 | 80/20 | 70/30 | 70/30 | 70/30 |
| C/B rate index | 233 | 233 | 233 | 400 | 400 | 400 | 233 | 233 | 233 |
| Evaluation | | | | | | | | | |
| Fuel efficiency index | 96 | 100 | 102 | 111 | 115 | 117 | 116 | 120 | 122 |
| Abrasion resistance index | 127 | 130 | 134 | 104 | 107 | 111 | 103 | 106 | 110 |
| Tire weight | 104 | 104 | 104 | 103 | 103 | 103 | 105 | 105 | 105 |
| Molding processability | 104 | 102 | 103 | 109 | 107 | 108 | 109 | 107 | 108 |
| E* $_{70°C}$ | 8.8 | 6.8 | 7.8 | 6.0 | 4.0 | 5.0 | 6.0 | 4.0 | 5.0 |
| Tan δ $_{70°C}$ | 0.15 | 0.12 | 0.12 | 0.13 | 0.10 | 0.10 | 0.13 | 0.10 | 0.10 |

From the results in Tables 4 to 6, it can be found that a high degree of balance of fuel efficiency, abrasion resistance, and molding processability can be achieved by adding a predetermined amount of a natural rubber to the rubber component of the cap tread, stipulating a BET specific surface area and a content of silica comprised in the rubber composition, and further stipulating a mass ratio of the cap tread to the base tread. Moreover, when a fine particle silica is used, a specific gravity of the fine particle silica is large, and therefore there are tendencies that a specific gravity of the cap tread becomes larger than that of the base tread, and the larger the cap ratio is, the heavier the tire weight becomes, accordingly deteriorating fuel efficiency, and in Comparative example 6 in which a cap/base ratio index (C/B × 100) is 1900, it can be found that fuel efficiency is deteriorated. Furthermore, when $E^*_{70°C}$ is within a range of 1.9 to 9.5 MPa and tan $\delta_{70°C}$ is within a range of 0.05 to 0.17, it can be found that a high degree of balance of fuel efficiency, abrasion resistance, and molding processability can be further achieved.

## Claims

1. A pneumatic tire comprising:

   a tread composed of a cap tread and a base tread,
   wherein the cap tread is formed of a rubber composition comprising 30 to 120 parts by mass of silica having 180 to 280 $m^2/g$ of a BET specific surface area, measured by a BET method according to ASTM D3037-93, based on 100 parts by mass of a rubber component comprising 10% by mass or more and less than 30% by mass of a natural rubber, and
   wherein C and B satisfy the following inequality (1),

$$150 \leq C/B \times 100 \leq 900 \quad (1),$$

   where C represents a ratio (% by mass) of a mass of the cap tread to a total mass of the tread, and B represents a ratio (% by mass) of a mass of the base tread to the total mass of the tread.

2. The pneumatic tire of claim 1, wherein the rubber composition further comprises a silane coupling agent.

3. The pneumatic tire of claim 1 or 2, wherein a complex elastic modulus at 70°C $E^*_{70°C}$ of the rubber composition is 1.9 to 9.5 Mpa,
   wherein the complex elastic modulus at 70°C $E^*_{70°C}$ is measured by the method described in the description.

4. The pneumatic tire of any one of claims 1 to 3, wherein a loss tangent at 70°C tan $\delta_{70°C}$ of the rubber composition is 0.05 to 0.17,
   wherein the loss tangent at 70°C tan $\delta_{70°C}$ is measured by the method described in the description.

5. The pneumatic tire of any one of claims 1 to 4, wherein the natural rubber is a modified natural rubber having a phosphorus content of 500 ppm or less.

6. The pneumatic tire of any one of claims 1 to 5, wherein the natural rubber is a modified natural rubber having a nitrogen content of 0.30% by mass or less.

7. The pneumatic tire of claim 5 or 6, wherein the modified natural rubber is a saponified natural rubber.

8. The pneumatic tire of claim 2, wherein the silane coupling agent is a compound comprising a bond unit A represented by the following chemical formula (I) and a bond unit B represented by the following chemical formula (II),

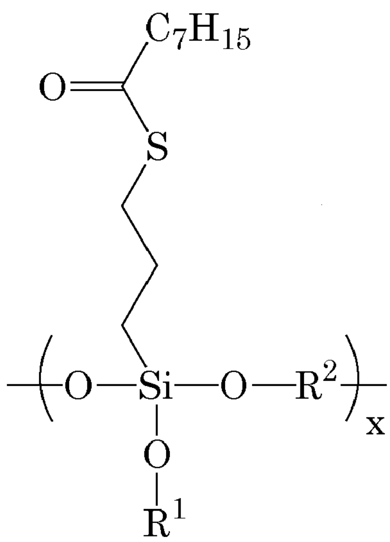

(I)

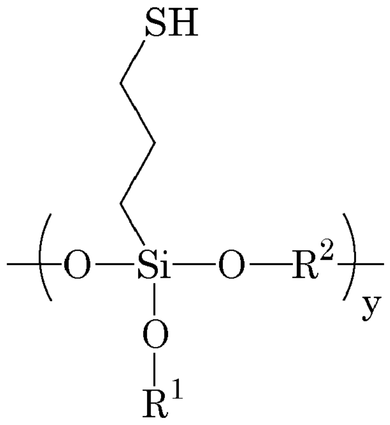 ( I I )

(where x is an integer of 0 or more, and y is an integer of 1 or more. $R^1$ represents hydrogen, a halogen, a branched or non-branched alkyl group having 1 to 30 carbon atoms, a branched or non-branched alkenyl group having 2 to 30 carbon atoms, a branched or non-branched alkynyl group having 2 to 30 carbon atoms, or a group in which hydrogen at terminal of the alkyl group is substituted with hydroxyl group or carboxyl group. $R^2$ represents a branched or non-branched alkylene group having 1 to 30 carbon atoms, a branched or non-branched alkenylene group having 2 to 30 carbon atoms, or a branched or non-branched alkynylene group having 2 to 30 carbon atoms. $R^1$ and $R^2$ may together form a ring structure.)

## Patentansprüche

**1.** Luftreifen, umfassend:

einen Laufstreifen, der mit einem Decklaufstreifen und einem Basislaufstreifen aufgebaut ist,
wobei der Decklaufstreifen mit einer Kautschukzusammensetzung gebildet ist, die 30 bis 120 Massenteile Siliziumdioxid mit 180 bis 280 $m^2/g$ einer spezifischen BET-Oberfläche umfasst, gemessen durch ein BET-Verfahren gemäß ASTM D3037-93, bezogen auf 100 Massenteile einer Kautschukkomponente, die 10 Massen-% oder mehr und weniger als 30 Massen-% eines Naturkautschuks umfasst, und
wobei C und B der folgenden Ungleichung (1) genügen,

$$150 \leq C/B \times 100 \leq 900 \quad (1),$$

worin C ein Verhältnis (Massen-%) einer Masse des Decklaufstreifens zu einer gesamten Masse des Laufstreifens darstellt, und B ein Verhältnis (Massen-%) einer Masse des Basislaufstreifens zu der gesamten Masse des Laufstreifens darstellt.

**2.** Luftreifen nach Anspruch 1, wobei die Kautschukzusammensetzung zudem ein Silankopplungsmittel umfasst.

**3.** Luftreifen nach Anspruch 1 oder 2, wobei ein komplexer Elastizitätsmodul bei 70°C $E^*_{70°C}$ der Kautschukzusammensetzung 1,9 bis 9,5 MPa beträgt,
wobei der komplexe Elastizitätsmodul bei 70°C $E^*_{70°C}$ durch das in der Beschreibung geschilderte Verfahren gemessen ist.

**4.** Luftreifen nach einem der Ansprüche 1 bis 3, wobei ein Verlusttangens bei 70°C tan $\delta_{70°C}$ der Kautschukzusammensetzung 0,05 bis 0,17 beträgt,
wobei der Verlusttangens bei 70°C tan $\delta_{70°C}$ durch das in der Beschreibung geschilderte Verfahren gemessen ist.

**5.** Luftreifen nach einem der Ansprüche 1 bis 4, wobei der Naturkautschuk ein modifizierter Naturkautschuk mit einem Phosphorgehalt von 500 ppm oder weniger ist.

**6.** Luftreifen nach einem der Ansprüche 1 bis 5, wobei der Naturkautschuk ein modifizierter Naturkautschuk mit einem Stickstoffgehalt von 0,30 Massen-% oder weniger ist.

**7.** Luftreifen nach Anspruch 5 oder 6, wobei der modifizierte Naturkautschuk ein verseifter Naturkautschuk ist.

**8.** Luftreifen nach Anspruch 2, wobei das Silankopplungsmittel eine Verbindung ist, die eine durch die folgende chemische Formel (I) dargestellte Bindungseinheit A und eine durch die folgende chemische Formel (II) dargestellte Bindungseinheit B umfasst,

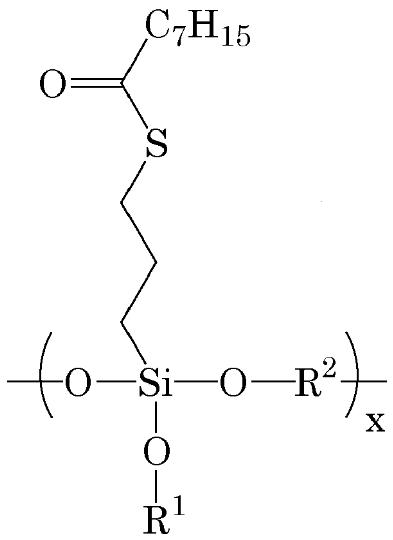
( I )

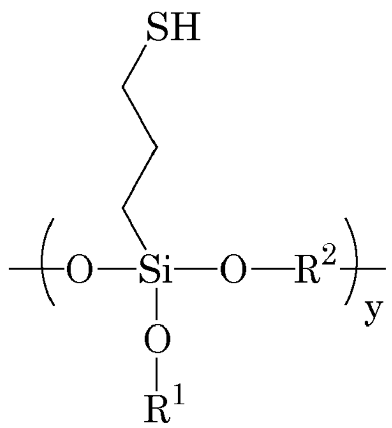
( II )

(worin x eine ganze Zahl von 0 oder mehr ist, und y eine ganze Zahl von 1 oder mehr ist. $R^1$ stellt Wasserstoff, ein Halogen, eine verzweigte oder unverzweigte Alkylgruppe mit 1 bis 30 Kohlenstoffatomen, eine verzweigte oder unverzweigte Alkenylgruppe mit 2 bis 30 Kohlenstoffatomen, eine verzweigte oder unverzweigte Alkinylgruppe mit 2 bis 30 Kohlenstoffatomen oder eine Gruppe, in der Wasserstoff am Ende der Alkylgruppe durch Hydroxylgruppe oder Carboxylgruppe substituiert ist, dar. $R^2$ stellt eine verzweigte oder unverzweigte Alkylengruppe mit 1 bis 30 Kohlenstoffatomen, eine verzweigte oder unverzweigte Alkenylengruppe mit 2 bis 30 Kohlenstoffatomen oder eine verzweigte oder unverzweigte Alkinylengruppe mit 2 bis 30 Kohlenstoffatomen dar. $R^1$ und $R^2$ können zusammen eine Ringstruktur bilden.)

## Revendications

**1.** Pneumatique comprenant :

une bande de roulement composée d'une bande de roulement de revêtement et d'une bande de roulement de base,

dans lequel la bande de roulement de revêtement est formée à base d'une composition de caoutchouc comprenant 30 à 120 parties en masse de silice ayant une aire de surface spécifique BET de 180 à 280 $m^2/g$, mesurée par la méthode BET selon la norme ASTM D3037-93, sur la base de 100 parties en masse d'un

composant de caoutchouc comprenant 10 % en masse ou plus et moins de 30 % en masse de caoutchouc naturel, et

dans lequel C et B satisfont l'inégalité suivante (1),

$$150 \leq C/B \times 100 \leq 900 \quad (1),$$

où C représente un ratio (% en masse) d'une masse de la bande de roulement de revêtement sur une masse totale de la bande de roulement, et B représente un ratio (% en masse) d'une masse de la bande de roulement de base sur la masse totale de la bande de roulement.

2. Pneumatique selon la revendication 1, dans lequel la composition de caoutchouc comprend en outre un agent de couplage silane.

3. Pneumatique selon la revendication 1 ou la revendication 2, dans lequel un module élastique complexe à 70 °C $E^*_{70\ °C}$ de la composition de caoutchouc est de 1,9 à 9,5 MPa,
dans lequel le module élastique complexe à 70 °C $E^*_{70\ C}$ est mesuré par le procédé décrit dans la description.

4. Pneumatique selon l'une quelconque des revendications 1 à 3, dans lequel une tangente de perte à 70°C tan $\delta_{70\ °C}$ de la composition de caoutchouc est de 0,05 à 0,17,
dans lequel la tangente de perte à 70 °C tan $\delta_{70\ °C}$ est mesurée par le procédé décrit dans la description.

5. Pneumatique selon l'une quelconque des revendications 1 à 4, dans lequel le caoutchouc naturel est un caoutchouc naturel modifié ayant une teneur en phosphore inférieure ou égale à 500 ppm.

6. Pneumatique selon l'une quelconque des revendications 1 à 5, dans lequel le caoutchouc naturel est un caoutchouc naturel modifié ayant une teneur en azote inférieure ou égale à 0,30 % en masse.

7. Pneumatique selon la revendication 5 ou la revendication 6, dans lequel le caoutchouc naturel est un caoutchouc naturel saponifié.

8. Pneumatique selon la revendication 2, dans lequel l'agent de couplage silane est un composé comprenant une unité de liaison A représentée par la formule chimique suivante (I) et une unité de liaison B représentée par la formule chimique suivante (II),

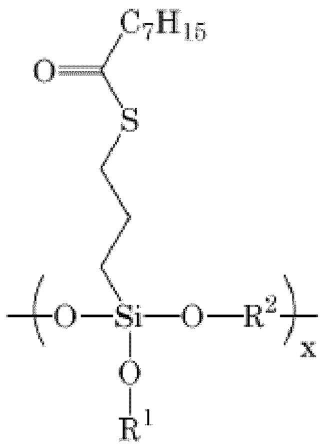

(I)

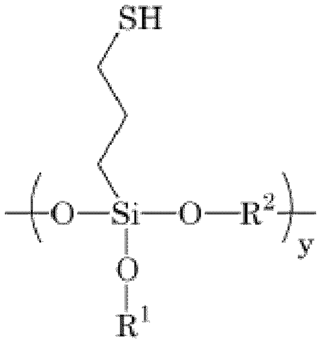

(II)

(où x is an nombre entier égal ou supérieur à 0, et y est un nombre entier égal ou supérieur à 1. $R^1$ représente un atome d'hydrogène, d'halogène, un groupement alkyle ramifié ou non ramifié ayant 1 à 30 atomes de carbone, un groupement alcényle ramifié ou non ramifié ayant 2 à 30 atomes de carbone, un groupement alcynyle ramifié ou non ramifié ayant 2 à 30 atomes de carbone, ou un groupement dans lequel un atome d'hydrogène à la fin du groupement alkyle est substitué avec un groupement hydroxyle ou un groupement carboxyle. $R^2$ représente un groupement alcylène ramifié ou non ramifié ayant 1 à 30 atomes de carbone, un groupement alcénylène ramifié ou non ramifié ayant 2 à 30 atomes de carbone, ou un groupement alcynylène ramifié ou non ramifié ayant 2 à 30 atomes de carbone. $R^1$ et $R^2$ peuvent former ensemble une structure annulaire.)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011001521 A
- JP 2013177113 A
- JP 2010138359 A
- JP 2010174169 A